(19) Europäisches Patentamt

European Patent Office

Office européen des brevets

(11) **EP 1 729 247 A1**

(12) **EUROPÄISCHE PATENTANMELDUNG**

(43) Veröffentlichungstag:
06.12.2006 Patentblatt 2006/49

(51) Int Cl.:
*G06Q 10/00* (2006.01)

(21) Anmeldenummer: 05011856.1

(22) Anmeldetag: 01.06.2005

(84) Benannte Vertragsstaaten:
AT BE BG CH CY CZ DE DK EE ES FI FR GB GR
HU IE IS IT LI LT LU MC NL PL PT RO SE SI SK TR
Benannte Erstreckungsstaaten:
AL BA HR LV MK YU

(71) Anmelder: **InVision Software AG**
**40880 Ratingen (DE)**

(72) Erfinder:
• **Bollenbeck, Peter c/o InVision Software AG**
**40880 Ratingen (DE)**
• **Kemper, Ralf c/o InVision Software AG**
**40880 Ratingen (DE)**

(74) Vertreter: **Lippich, Wolfgang et al**
**Patentanwalt Samson & Partner,**
**Widenmayerstrasse 5**
**80538 München (DE)**

(54) **Mitarbeitereinsatzplanung**

(57)    Die Erfindung betrifft ein Verfahren zur Erstellung eines Einsatzplanes für Mitarbeiter mit Ein- oder Mehrfachqualifikation zum Ausführen von Aktivitäten, die jeweils eine Einfachqualifikation erfordern. Das Verfahren generiert wiederholt eine Einsatzplan-Zuordnung der Mitarbeiter, bewertet die Qualität der jeweils generierten Zuordnung anhand einer Zielfunktion, und verwendet schließlich eine der Zuordnungen auf der Grundlage der Qualitätsbewertung als die den Einsatzplan darstellende Zuordnung. Die Zielfunktion enthält einen Term, der Zuordnungen umso qualitativ hochwertiger bewertet, je kleiner der Unterschied zwischen der Anzahl der auf die Aktivitäten eingesetzten Mitarbeiter und dem berechneten Gesamtmitarbeiterbedarf der Aktivitäten ist.

Fig. 8

EP 1 729 247 A1

**Beschreibung**

GEBIET DER ERFINDUNG

Die vorliegende Erfindung bezieht sich allgemein auf Mitarbeiter-Einsatzplanung, und zum Beispiel auf Verfahren und Computerprogramme zur Erstellung von Einsatzplänen für Mitarbeiter und zur Einrichtung von Telefonanrufroutern anhand solcher Einsatzpläne, sowie auf einen entsprechend eingerichteten Telefonanrufrouter.

HINTERGRUND DER ERFINDUNG

In zahlreichen Dienstleistungs- und Produktionsbranchen besteht die Notwendigkeit, Mitarbeiter im Rahmen eines Einsatzplanes über einen bestimmten Zeitraum verschiedenen, zu erfüllenden Aufgaben zuzuordnen. Traditionellerweise werden dazu Einsatzpläne anhand von Erfahrungswerten manuell erstellt. Für Anwendungen mit relativ hohem Personalkostenanteil und zeitlich variierendem Mitarbeiterbedarf ist eine Mitarbeiterplanung kompliziert; ihre Optimierung kann jedoch oft zu einem beträchtlichen Produktivitätszuwachs führen.

Ein typisches Anwendungsbeispiel sind Call Center, in denen über den Tag verteilt unterschiedlich viele Telefonrufe eingehen, die von in Schichten eingeteilten Mitarbeitern beantwortet werden. Vielfach sind Call Center ein zentrales Bindeglied in der Beziehung zwischen einem Produzenten bzw. Dienstleister und Kunden. In einigen Bereichen, wie z.B. Direktbanken und Telekommunikationsdiensteanbieter, sind Call Center sogar die einzige Schnittstelle des Kunden mit dem Unternehmen. Daher sind viele Unternehmen an einem kundenorientierten und zugleich effizienten Betrieb ihrer Call Center interessiert, so dass das Management von Call Centern zu einem anwendungsorientierten Forschungsgebiet im Bereich der Optimierung geworden ist. Dabei geht es im wesentlichen darum, die gegenläufigen Ziele, dem Kunden einerseits eine möglichst hohe Servicequalität zu bieten und andererseits ein Call Center kostensparend zu betreiben in Einklang zu bringen.

Ein wesentlicher Servicequalität-Parameter im Bereich von Call Centern ist z.B. die Erreichbarkeit, d.h. wie schnell die Kunden in einem Call Center mit einem Mitarbeiter verbunden werden. In der Praxis wird bzgl. der Erreichbarkeit häufig mit der Meßgröße "Telefonservicefaktor" (TSF) gearbeitet, die sich aus zwei Komponenten zusammensetzt:
einem zeitlichen Ziel, innerhalb dessen Anrufe von einen Mitarbeiter entgegengenommen werden sollen (zum Beispiel innerhalb von 20 Sekunden) und dem Prozentsatz aller Anrufe, für die dieses Ziel erreicht wird (zum Beispiel 80 Prozent). In einigen Call Centern wird als Meßgröße der Erreichbarkeit die durchschnittliche Wartezeit der Anrufer verwendet. Telefonservicefaktor und durchschnittliche Wartezeit lassen sich jedoch mathematisch ineinander umwandeln. Ein weiterer Parameter ist z.B. die Sofortlösungsquote, die ausdrückt, wieviel Prozent aller Anrufe im Erstkontakt mit dem Kunden sofort gelöst werden können. Ein dritter Parameter ist die Lösungszeit, die angibt, wie lange es dauert, bis ein Ergebnis dem Kunden bereitgestellt wird.

Die Vorhersage des innerhalb eines Zeitintervalls zu erwartenden Anrufaufkommens - häufig auch als Arbeitsvolumen bezeichnet (Anzahl Telefonanrufe * durchschnittliche Dauer eines Anrufs / 3600 Sekunden) - in einem Call Center läßt sich anhand von Erfahrungswerten machen, die auf historischen Beobachtungen beruhen, da die Anzahl der zu erwartenden Anrufe täglichen, wöchentlichen und jahreszeitlichen Zyklen unterliegt. Die Berechnung, wie viele Mitarbeiter man angesichts des vorhergesagten Arbeitsvolumens benötigt, um eine gewünschte Servicequalität zu erreichen, kann mittels einer im Call Center Bereich verbreiteten Formel, der sog. ErlangC-Formel, geschehen (vgl. Borst, S. und Seri, P., "Robust Algorithms for Sharing Agents with Multiple Skills", Bell Labs, Lucent Technologies, Murray Hill, NJ, 2000, S.5). Jedoch macht diese Formel einige Annahmen, die in der Realität nicht immer zutreffen und führt in der Praxis häufig zu einer personellen Überbesetzung des Call Centers, so dass man darüber hinaus versucht, eine Vorhersage über die Anzahl der benötigten Call Center Mitarbeiter anhand von Simulationsprogrammen zu machen. Insbesondere geht die Erlang C-Formel davon aus, dass jeder Mitarbeiter nur für einen Anfragetyp qualifiziert ist.

Da in einem Call Center typischerweise Kunden mit unterschiedlichen Anfragen anrufen, müssen die Mitarbeiter in ihrer Gesamtheit über verschiedene Qualifikationen verfügen, um das Spektrum der Kundenanfragen möglichst weitgehend abdecken zu können. Während in einigen Call Centern die Mitarbeiter nur für einen Typ von Anfragen qualifiziert sind, sind in anderen Call Centern die Mitarbeiter so geschult, dass sie unterschiedliche Typen von Anfragen bedienen können. Wie im Folgenden noch genauer erläutert wird, ist es sinnvoll, wenn zumindest ein Teil der Mitarbeiter unterschiedliche Anfragetypen beantworten kann. In diesem Zusammenhang kommt der unten näher erläuterte "Pooling-Effekt" zum Tragen, wonach eine Mehrfachqualifikation von Mitarbeitern zur Erzielung einer besseren Servicequalität führen kann (siehe z.B. H. Henn et al., Handbuch Call Center Management, telepublic Verlag, Hannover, 2.Auflage, S. 204-205 und Borst und Seri, S. 9, die diesen Effekt folgendermaßen ausdrücken: "Potential economies of scale from dynamically sharing the agents among the various call classes").

In der Patentschrift US 6,044,355 der Firma IEX Corp. wird ein Verfahren zur zeitlichen Mitarbeitereinteilung in einer Arbeitsumgebung vorgestellt, bei dem einzelne Mitarbeiter unterschiedliche Qualifikationen besitzen und der Bedarf an Mitarbeitern mit unterschiedlicher Qualifikation zeitlichen Schwankungen unterliegt. Der zu simulierende Zeitabschnitt wird in kürzere Zeitintervalle zerlegt und auf jedes Zeitintervall wird eine - anfangs nur abgeschätzte - Anzahl Mitarbeiter mit entsprechenden Qualifikationen zugeteilt, die im Laufe mehrerer Simulationsdurchgänge mittels eines Feedback-Mechanismus angepaßt wird. Es werden Anrufe entsprechend des Umfangs des vorhergesagten Anrufvolumens simuliert und überprüft, wie gut die eingeteilten Mitarbeiter mit ihren jeweiligen Qualifikationen das Anrufvolumen bewältigen. Die Ergebnisse der Simulation werden statistisch ausgewertet und dazu verwendet, die Mitarbeiterzuteilung zu verbessern. Nach einer Reihe von Simulationsdurchgängen wird so i.a. eine Zuordnung von Mitarbeitern mit entsprechenden Qualifikationen gefunden, die die gewünschte Servicequalität leistet.

KURZFASSUNG DER ERFINDUNG

Gemäß einem ersten Aspekt betrifft die Erfindung ein Verfahren zur Erstellung eines Einsatzplanes für Mitarbeiter mit Ein- oder Mehrfachqualifikation zum Ausführen von Aktivitäten, die jeweils eine Einfachqualifikation erfordern. Das Verfahren generiert wiederholt eine Einsatzplan-Zuordnung der Mitarbeiter, bewertet die Qualität der jeweils generierten Zuordnung anhand einer Zielfunktion und verwendet schließlich eine der Zuordnungen auf der Grundlage der Qualitätsbewertung als die den Einsatzplan darstellende Zuordnung. Die Zielfunktion enthält einen Term, der Zuordnungen umso qualitativ hochwertiger bewertet, je kleiner der Unterschied zwischen der Anzahl der auf die Aktivitäten eingesetzten Mitarbeiter und dem berechneten Gesamtmitarbeiterbedarf der Aktivitäten ist.

Ein weiterer Aspekt betrifft ein Verfahren zum Einrichten eines Telefonanrufrouters auf der Grundlage eines zu erstellenden Einsatzplanes für Mitarbeiter mit Ein- oder Mehrfachqualifikation zum Ausführen von Aktivitäten, die jeweils eine Einfachqualifikation erfordern. Das Verfahren generiert wiederholt eine Einsatzplan-Zuordnung der Mitarbeiter, bewertet die Qualität der jeweils generierten Zuordnung anhand einer Zielfunktion und verwendet schließlich eine der Zuordnungen auf der Grundlage der Qualitätsbewertung als die den Einsatzplan darstellende Zuordnung. Die Zielfunktion enthält einen Term, der Zuordnungen umso qualitativ hochwertiger bewertet, je kleiner der Unterschied zwischen der Anzahl der auf die Aktivitäten eingesetzten Mitarbeiter und dem berechneten Gesamtmitarbeiterbedarf der Aktivitäten ist. Der Telefonanrufrouter wird derart eingerichtet, dass er Telefonanrufe, zu deren Beantwortung jeweils eine Einfachqualifikation erforderlich ist, an einen Mitarbeiter weiterleitet, der laut eines nach dem obigen Verfahren erstellten Einsatzplanes zum Zeitpunkt des Telefonanrufs im Einsatz ist und qualifiziert ist, diesen zu beantworten.

Ein weiterer Aspekt betrifft einen Telefonanrufrouter, der so eingerichtet ist, dass er Telefonanrufe, zu deren Beantwortung jeweils eine Qualifikation erforderlich ist, an einen Mitarbeiter weiterleitet, der laut eines nach einem der obigen Verfahren erstellten Einsatzplanes zum Zeitpunkt des Telefonanrufs im Einsatz ist und qualifiziert ist, den Telefonanruf zu beantworten.

Ein weiterer Aspekt betrifft ein Computerprogramm, das bei Ausführung auf einem Computer eines der obigen Verfahren durchführt.

Weitere Merkmale sind in den offenbarten Vorrichtungen und Verfahren enthalten oder gehen für den fachmännischen Leser aus der folgenden detaillierten Beschreibung von Ausführungsformen und den angefügten Zeichnungen hervor.

BESCHREIBUNG DER ZEICHNUNGEN

Ausführungsformen der Erfindung werden nun beispielhaft und unter Bezugnahme auf die angefügte Zeichnung beschrieben, in der:

Fig. 1 einen beispielhaften Bedarfsplan über einem Zeitraum, für den ein Einsatzplan erstellt werden soll, zeigt;
Fig. 2 beispielhaft zur Verfügung stehende Mitarbeiter und ihre jeweiligen Qualifikationen zeigt;
Fig. 3 eine erste Zuordnung und die sich ergebende Bewertung durch eine Zielfunktion im Rahmen einer ersten Variante eines Optimierungsverfahrens zeigt;
Fig. 4 eine zweite Zuordnung (nach Ausführung eines Zuges ausgehend von der ersten Zuordnung) und die sich ergebende Bewertung durch eine Zielfunktion einer ersten Variante des Optimierungsverfahrens zeigt;
Fig. 5 einen beispielhaften Einsatzplan, bei dem Mitarbeiter auf einzelne Zeitintervalle zugewiesen sind, zeigt;
Fig. 6 Bewertungen der ersten und zweiten Zuordnung (aus Fig. 3 und 4) im Rahmen einer zweiten Variante des Optimierungsverfahrens zeigt, bei dem der tatsächliche Mitarbeiterbedarf mittels einer Approximationsformel berechnet wird;
Fig. 7 einen Telefonanrufrouter veranschaulicht, der eingehende Telefonanrufe auf Arbeitsplätze entsprechend der erforderlichen Qualifikationen durchstellt;
Fig. 8 ein Ablaufdiagramm der ersten Variante des Optimierungsverfahrens zeigt;
Fig. 9 ein Ablaufdiagramm der zweiten Variante des Optimierungsverfahrens zeigt.

BESCHREIBUNG DER BEVORZUGTEN AUSFÜHRUNGSBEISPIELE

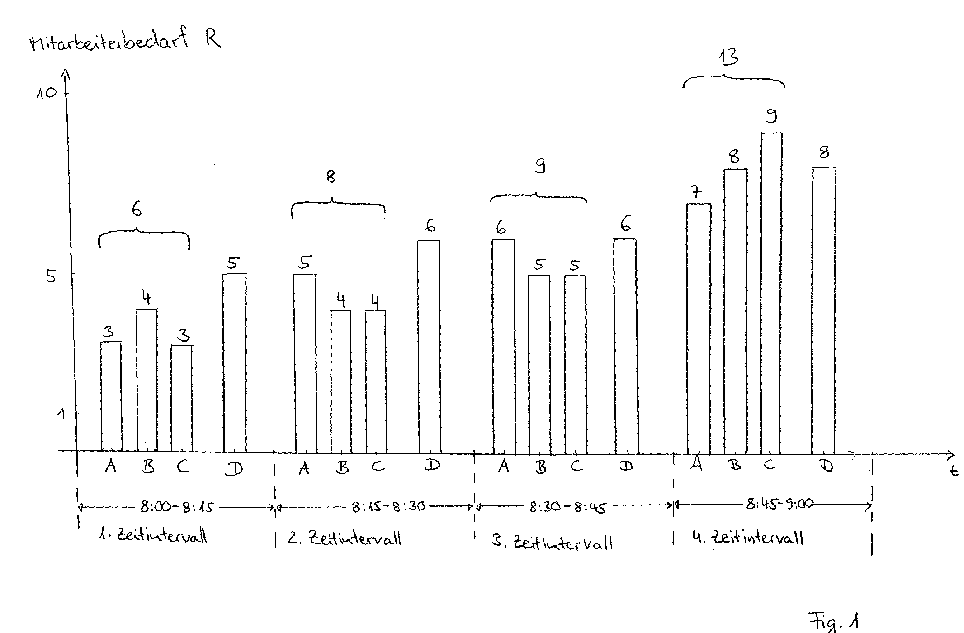

Fig. 1 zeigt einen beispielhaften Bedarfsplan, der angibt, wie viele Mitarbeiter mit welcher Qualifikation man über einen Zeitraum einer Stunde hinweg in einem Call Center benötigt. Bevor die Fig. 1 weiter beschrieben wird, werden jedoch einige Aspekte der Ausführungsformen diskutiert.

Es sei zunächst angemerkt, dass sich die vorliegende Beschreibung und die Ansprüche nicht nur auf Anwendungen im Call-Center-Bereich beziehen, sondern allgemein auf die Einsatzplanung für Mitarbeiter, auch in anderen Gebieten. Der Bezug zu Call Centern ist nur beispielhaft.

Die Erstellung von Einsatzplänen für Mitarbeiter ist eine komplexe Aufgabe, insbesondere dann, wenn Mitarbeiterbedarfe über einen Zeitraum hinweg nicht konstant sind. Im Falle von Call Centern läßt sich beispielsweise beobachten, dass die eingehenden Anrufe nicht über einen Tag gleichverteilt sind, sondern dass sich in Vormittags- und frühen Abendstunden Spitzenbedarfe ergeben, wohingegen nachts der Bedarf auf ein Minimum sinkt. Eine zusätzliche Schwierigkeit bei der Zuteilung von Mitarbeitern auf Aufgaben ergibt sich, wenn verschiedene Aktivitäten zu erledigen sind und die Mitarbeiter nicht nur eine Aufgabe erfüllen können, sondern für mehrere Aktivitäten qualifiziert sind. Vielfach ist es jedoch wünschenswert, wenn Mitarbeiter mehrere Aktivitäten erledigen können. In einem Call Center eines Telekommunikationsunternehmens hat man z.B. Kundenanrufe, die Fragen zu Telefonrechnungen betreffen, Anrufe, bei denen es um Meldung einer Leitungsstörung geht, Anrufe, die Probleme mit einem Internetzugang beinhalten und Anrufe, bei denen es um eine Bestellung geht. Ruft ein Kunde mit einem Anliegen in einem Call Center an, so wählt er in der Regel eine Telefonnummer, deren letzte Ziffer(n) angibt/angeben, welches Anliegen er hat. Dann wird von einem Telefonanrufrouter mit einem Mitarbeiter verbunden, der gerade frei und qualifiziert ist, um das Anliegen zu bearbeiten. Alternativ dazu wählt der Kunde eine Zentralnummer und wählt dann mittels Spracheingabe oder Zifferneingabe in einem Menu sein Anliegen aus. In der Regel können nicht alle unterschiedlichen Anliegen eines Kundens bzw. Anruftypen von allen Mitarbeitern eines Call Centers beantwortet werden, sondern die Mitarbeiter bearbeiten spezialisiert einen Anruftyp. Im Falle eines Call Centers versteht man unter einer Aktivität also die Bearbeitung eines Anruftyps. Allgemein gesprochen ist eine Aktivität eine Tätigkeit, auf die man Mitarbeiter zuordnet. Dabei kann eine Aktivität von einem Mitarbeiter nur dann erledigt werden, wenn er für diese qualifiziert ist. Hat ein Mitarbeiter nur die Qualifikation für die Erledigung einer Aktivität, so spricht man von Einfachaktivität. Ist ein Mitarbeiter für mehrere Aktivitäten qualifiziert, so verfügt er über eine Mehrfachqualifikation.

Sind für die Bearbeitung eines Anruftyps nicht genügend Mitarbeiter vorhanden, so kann ein Anrufer unter Umständen nicht sofort an einen Mitarbeiter durchstellt werden, da alle Mitarbeiter gerade mit der Bearbeitung anderer Anrufe beschäftigt sind. Der Anrufer wird dann typischerweise in eine Warteschlange eingereiht, bis alle Anrufer vor ihm in der Warteschlange bedient worden sind und ein Mitarbeiter frei wird und sich nun dem Kunden widmen kann. Abhängig von der Wichtigkeit seines Anrufs und seiner Geduld wird der Kunde nur eine gewisse Toleranzzeit in der Warteschlange warten und dann den Anruf abbrechen. Daher sind Unternehmen interessiert, die Wartezeit den ganzen Tag über unter einem Grenzwert zu halten. Da das Anrufvolumen variiert, müssen also zu unterschiedlichen Zeiten unterschiedlich viele Mitarbeiter auf die einzelnen Anruftypen zugeteilt werden.

Verfügt jeder der Mitarbeiter nur über eine Einfachqualifikation, so kann man sich vorstellen, dass für jeden Anruftyp eine Warteschlange existiert, die von einer Anzahl an Mitarbeitern mit Einfachqualifikation bedient wird. Die Anzahl der auf einen Anruftyp zugeteilten Mitarbeiter hängt dabei von einer gewünschten Servicequalität und einem erwarteten Anrufvolumen ab.

Geht man - als vereinfachendes Beispiel - davon aus, dass zu Beginn jeder Minute ein Anruf eingeht, dessen Erledigung 45 Sekunden dauert, dann bildet sich keine Warteschlange, da der Anruf schon erledigt ist, bevor ein neuer Anruf eintrifft. Diese Annahme ist allerdings unrealistisch, denn die Anzahl der pro Zeitintervall in die einzelnen Warteschlangen eintreffenden Anrufe unterliegt einer Poisson-Verteilung mit Ankunftsrate λ.

Für eine Poisson-Verteilung gilt folgendes:

$$P(r) = \frac{\lambda^r e^{-\lambda}}{r!}$$

$$E = \lambda$$

$$Var = \lambda \qquad\qquad (1)$$

$$Sdev = \sqrt{\lambda}$$

$$Varc = \frac{1}{\sqrt{\lambda}}$$

wobei λ die Anzahl der pro Zeiteinheit eintreffenden Anrufe angibt. E bezeichnet den Erwartungswert der Verteilung, also die mittlere Anzahl eintreffender Anrufe. Var ist die Varianz, Sdev die Standardabweichung und Varc der Variationskoeffizient (bzw. relative Standardabweichung), also das Verhältnis zwischen Standardabweichung und Erwartungswert. Der Variationskoeffizient ist ein Maß dafür, wie unregelmäßig Anrufe eintreffen. Angenommen man hat eine mittlere Ankunftsrate von zwei Anrufen pro Minute und eine mittlere Bearbeitungszeit von zwei Anrufen pro Minute, so dürfte sich, wenn alle 30 Sekunden ein Anruf eingeht und die Bearbeitung ebenfalls dreißig Sekunden dauert, keine Warteschlange bilden. Da die Anrufe jedoch stochastisch verteilt - und damit unregelmäßig - eintreffen, kann es trotz der aufeinander abgestimmten Mittelwerte passieren, dass ein Anruf eintrifft, obwohl die Bearbeitung des vorhergehenden Anrufs noch nicht abgeschlossen ist. Dann bildet sich eine Warteschlange, und der Variationskoeffizient ist ein Maß dafür, mit welcher Wahrscheinlichkeit dies passiert. Unterliegen die Anrufe einer Poisson-Verteilung, so ist der Variationskoeffizient der Kehrwert der Quadratwurzel der mittleren Ankunftsrate.

Hat man mehrere Mitarbeiter mit Einfachqualifikation, die spezialisiert auf einem Anruftyp arbeiten, so hat man also mehrere Warteschlangen, wobei die Anrufe jeweils Poisson-verteilt eintreffen. Wenn man nun die Mitarbeiter so ausbildet, dass alle Mitarbeiter alle Anruftypen erledigen können (cross training), so kann man eine Warteschlange bilden, in die man alle Anrufe einreiht und sie der Reihe nach von den Mitarbeitern bearbeiten lassen. Es ergibt sich dann eine Poisson-Verteilung, deren mittlere (Gesamt-)Ankunftsrate $\lambda_g$ gleich der Summe der Ankunftsraten der einzelnen Warteschlangen $\lambda_i$ ist.

$$\lambda_g = \sum_i \lambda_i \qquad\qquad (2)$$

Für den Variationskoeffizient dieser Verteilung gilt:

$$Varc_g = \frac{1}{\sqrt{\sum_i \lambda_i}} \qquad\qquad (3)$$

Fasst man also n Poisson-Prozesse jeweils mit derselben mittleren Ankunftsrate λ zu einem Poisson-Prozess zusammen, so bleibt der Variationskoeffizient nicht etwa bei $\frac{1}{\sqrt{\lambda}}$, sondern reduziert sich auf den Wert $\frac{1}{\sqrt{n}} \cdot \frac{1}{\sqrt{\lambda}}$, also um den Faktor $\frac{1}{\sqrt{n}}$. Dieser Faktor läßt erkennen, dass wenn man z.B. vier Server bzw. Warteschlangen zusammenfaßt, der Variationskoeffizient bereits um 50% reduziert wird, bei einer Zusammenfassung von acht Warteschlangen der Variationskoeffizient jedoch auf 35% reduziert wird. Bereits ein Zusammenlegen von wenigen Warteschlangen bringt eine starke Reduzierung des Variationskoeffizienten und damit der Wartezeit und somit eine Verbesserung des Servicelevels. Bereits ein Crosstraining von einigen Mitarbeitern, so dass diese alle Anruftypen erledigen können, bringt einen Vorteil, ähnlich dem, wenn man alle Leute für alle Aktivitäten schult. Möchte man das Servicelevel nicht verbessern, so kann man stattdessen die Anzahl der Mitarbeiter reduzieren.

Dieser Effekt wird in der Statistik als Pooling-Effekt bezeichnet und tritt dann auf, wenn sich die Variabilität von einzelnen Wahrscheinlichkeitsverteilungen durch Zusammenlegen reduzieren läßt. Anschaulich kann man sich den Pooling-Effekt so vorstellen: wenn man zwei Warteschlangen hat, die von jeweils einem Mitarbeiter bedient werden, die nur für eine Aufgabe qualifiziert sind, dann kann es passieren, dass für den einen Mitarbeiter keine Arbeit anfällt, während sich bei dem anderen Mitarbeiter eine Schlange bildet. Können beide Mitarbeiter jeweils die Aufgabe des anderen übernehmen, dann können sie sich gegenseitig in der Erledigung ihrer Aufgaben unterstützen, falls der eine Mitarbeiter nichts zu tun hat und sich beim anderen Mitarbeiter eine Schlange bildet. Durch die Zusammenlegung von Warteschlangen erhöht sich die Auslastung der Mitarbeiter, so dass man bei einer gleichbleibenden Anzahl von Mitarbeitern die Servicequalität erhöhen kann oder die Servicequalität bei einer Reduktion der Mitarbeiter beibehalten kann. Natürlich bringt der Pooling-Effekt nur dann eine Einsparung, wenn die Mitarbeiter nicht voll ausgelastet sind.

Da der Bedarf an Mitarbeitern pro Anruftyp über einen längeren Zeitrum hinweg nicht konstant ist, wird er bei manchen Ausführungsformen für kleine Zeitintervalle, typischerweise 15 Minuten berechnet. In jedem dieser Zeitintervalle wird das Arbeitsvolumen als konstant angesehen. Der Mitarbeiterbedarf richtet sich nach dem Arbeitsvolumen, welches nach folgender Formel berechnet wird.

$$Arbeitsvolumen = \frac{AnzahlderAnrufe \cdot Bearbeitungszeit}{3600 Sekunden} \tag{4}$$

Die Einheit des nach dieser Formel berechneten Arbeitsvolumens heißt "Erlang" (nach dem dänischen Mathematiker dieses Namens). Zur Prognose des Arbeitsvolumens verwendet man historische Daten, da das Arbeitsvolumen gewissen wiederkehrenden tages-, wochen- und jahreszeitlichen Zyklen unterworfen ist. Bei der Personalbedarfsplanung wird der Personalbedarf aus dem Arbeitsvolumen und einem gewünschten Servicelevel abgeleitet. Der Servicequalität-Parameter "Telefonservicefaktor", der angibt, dass der Anteil der Anrufe vom Anruftyp j, bei denen die Wartezeit größer als eine gewisse Zeitdauer $\sigma_j$ kleiner als ein gewisser Bruch $\varepsilon_j$ ist, läßt sich wie folgt formulieren:

$$P[W_j > \sigma_j] \le \varepsilon_j \tag{5}$$

Ein weiterer Servicequalität-Parameter zielt darauf ab, dass die Anrufe eines Anruftyps j im Mittel nicht länger als eine Zeitdauer $\tau_j$ warten müssen:

$$EW_j \le \tau_j \tag{6}$$

Anhand folgender Formeln läßt sich nun ein Mitarbeiterbedarf R für ein gegebenes Arbeitsvolumen a und ein Servicelevel berechnen:

$$P[W_j > t] = \pi(R_j, a_j)e^{-\frac{R_j - a_j}{b_j}t} \tag{7}$$

Die mittlere Wartezeit ergibt sich zu:

$$EW_j = \pi(R_j, a_j)\frac{b_j}{R_j - a_j} \tag{8}$$

Die Wahrscheinlichkeit einer Verzögerung ergibt sich zu:

$$\pi(R, a) = \frac{\dfrac{a^R}{R!}\dfrac{R}{R - a}}{\sum\limits_{k=0}^{R-1}\dfrac{a^k}{k!} + \dfrac{a^R}{R!}\dfrac{R}{R - a}} \tag{9}$$

wobei $R_j$ die Anzahl der für Anruftyp j zur Verfügung stehen Mitarbeiter, $a_j$ das Arbeitsvolumen des Anruftyps j und b die mittlere Bedienzeit ist. Da Gleichung 9 nicht analytisch nach R aufgelöst werden kann, erfolgt bei manchen Ausführungsformen die Berechnung durch Einsetzen verschiedener Mitarbeiteranzahlen $R_j$ in die obigen Formeln, bis man eine Mitarbeiteranzahl gefunden hat, die der Servicequalität und dem Arbeitvolumen gerecht wird. Ein effizientes Verfahren zur Berechnung der $R_j$-Werte, das bei manchen Ausführungsformen verwendet wird, ist beispielsweise in der US-Patentschrift 5,289,368 offenbart. Man beachte, dass sich die auf diese Weise berechneten Mitarbeiterbedarfszahlen auf den Fall beziehen, dass die Mitarbeiter nur über Einzelqualifikationen verfügen.

Hat man die Mitarbeiterbedarfe für die einzelnen Anruftypen berechnet, so erlaubt die folgende, bei einigen Ausführungsformen verwendete Formel von Borst und Seri (S.9) daraus den Gesamtmitarbeiterbedarf zu berechnen für den Fall, dass alle Mitarbeiter für alle Anruftypen qualifiziert sind.

$$R = \sum_{j=1}^{N} a_j + \sqrt{\sum_{j=1}^{N} (R_j - a_j)^2} \leq \sum_{j=1}^{N} a_j + \sum_{j=1}^{N} (R_j - a_j) = \sum_{j=1}^{N} R_j \qquad (10)$$

Wie man der Formel entnimmt, ist bei konstantem Arbeitsvolumen und Servicequalität der Gesamtbedarf der Mitarbeiter, wenn jeder Mitarbeiter alle Anruftypen bearbeiten kann (Term links vom "≤"), kleiner als die Summe der Mitarbeiterbedarfe für jeden einzelnen Anruftyp unter der Annahme, dass jeder Mitarbeiter nur über eine Einfachqualifikation verfügt (Term rechts vom "≤").

Wie bereits erwähnt, stecken beide Situationen Mitarbeiterbedarfe ab, die nicht einer realistischen Situation entsprechen, da man häufig eine Mischung aus Mitarbeitern mit Einfachqualifikationen, Mehrfachqualifikationen und evtl. Komplettqualifikationen (Mitarbeiter können alle Anruftypen beantworten) zur Verfügung hat. Diese Mischung aus Mitarbeitern mit verschiedenen Qualifikationen, häufig als Hybridsituation bezeichnet, wird in dem Verfahren der Ausführungsformen zum Erstellen eines Einsatzplanes für Mitarbeiter berücksichtigt.

Bei der Erstellung des Einsatzplanes werden Mitarbeiter, die Ein- und Mehrfachqualifikationen haben, entsprechend der berechneten Bedarfe auf Aktivitäten zugewiesen. Diese Zuordnung wird bei einigen Ausführungsformen nun anhand einer Zielfunktion bewertet. Die Zielfunktion umfasst einen Term, der Zuordnungen umso qualitativ hochwertiger bewertet, je kleiner der Unterschied zwischen der Anzahl der auf die Aktivitäten eingesetzten Mitarbeiter und einem berechneten Gesamtmitarbeiterbedarf ist. Wie unten noch näher erläutert wird, ist der Gesamtmitarbeiterbedarf bei einer ersten Variante der mit Formel 10 berechnete Wert, der sich auf den (i.a. eigentlich unrealistischen) Fall bezieht, dass alle Mitarbeiter eine Komplettqualifikation aufweisen. In der ersten Variante kann man von diesem unrealistischen Fall jedoch auch abweichen, indem man den berechneten Gesamtmitarbeiterbedarf im Hinblick auf tatsächlich zur Verfügung stehende Qualifikationen von Mitarbeitern korrigiert, wie weiter unten genauer erläutert wird. In der ersten Variante wird der Gesamtmitarbeiterbedarf nur einmal berechnet, wohingegen in einer zweiten Variante in jedem Optimierungsschritt ein Gesamtmitarbeiterbedarf anhand der aktuell gegebenen Mitarbeiterzuordnung berechnet wird, der der "Hybridsituation" Rechnung trägt. Die Mitarbeiter werden dabei über verschiedene kürzere Zeitintervalle, innerhalb derer der Mitarbeiterbedarf als konstant angenommen wird, zugeordnet. Eine Optimierungsprozedur testet auf einer gegebenen Zuordnung verschiedene Züge (d.h. Veränderungen der gegebenen Zuordnung), indem sie die dadurch neu entstandenen Zuordnungen mittels der Zielfunktion bewertet. In der Regel wird ein Zug, der zu einer qualitativ höherwertigen Zuordnung führt, schließlich gewissermaßen durchgeführt. Das genaue Vorgehen wird weiter unten beschrieben. Die durch diesen Zug entstehende Zuordnung ist ein neuer Ausgangspunkt der Optimierungsprozedur. Es werden immer wieder neue Zuordnungen generiert, bis man schließlich eine hinreichend gute Zuordnung von Mitarbeitern gefunden hat. Diese Zuordnung wird dann als Einsatzplan verwendet.

Das Zuordnen von Mitarbeitern auf Aktivitäten geschieht bei einigen Ausführungsformen also innerhalb eines Optimierungsverfahrens. Man kann sich vorstellen, dass die Zielfunktion von einem hochdimensionalen Raum der Zuordnungen (Zuordnungsraum), wobei jeder Punkt eine Zuordnung von Mitarbeitern mit einer Menge an Qualifikationen repräsentiert, auf einen skalaren Wert abbildet, der die Qualität der Zuordnung repräsentiert. Man beachte, dass die Zielfunktion des Verfahrens unabhängig von der Optimierungsprozedur ist, so dass sich - mit ein- und derselben Zielfunktion - eine Reihe verschiedener Optimierungsprozeduren einsetzen lassen. Zur Exploration des Zuordnungsraumes, insbesondere zum Auffinden von Extrema, verwendet man bei einigen Ausführungsformen sog. lokale Suchverfahren. Im Folgenden gehen wir ohne Beschränkung der Allgemeinheit davon aus, dass ein Minimum der Zielfunktion gesucht wird; obgleich das Suchen nach einem Maximum in analoger Weise mit den folgenden Prozeduren möglich ist.

Lokale Suchverfahren betrachten ausgehend von dem Punkt, in dem sie sich aktuell befinden, die Bewertungen ihrer Nachbarschaftspunkte, um zu entscheiden, in welche Richtung sie sich bewegen. Dazu definiert man auf dem Zuordnungsraum eine Nachbarschaftsrelation, indem man z.B. festlegt, dass zwei Zuordnungen als benachbart gelten, wenn sie sich in jedem Zeitintervall um höchstens eine bestimmte Anzahl Mitarbeiter unterscheiden. Der Übergang von einem Punkt in einen Nachbarpunkt wird als Elementarschritt bezeichnet, wobei die Auswertung der Zielfunktion für die Nachbarpunkte des Punktes, in dem man sich aktuell befindet, (also das Testen benachbarter Zuordnungen) als Probeschritt bezeichnet wird. Ausgehend von einem Punkt im Zuordnungsraum brauchen nicht alle benachbarten Punkte berücksichtigt zu werden, da sich einige von ihnen evtl. auf Zuordnungen beziehen, bei denen Mitarbeiter länger als z.B. die im Arbeitsvertrag zulässige Zeitdauer eingesetzt werden. Der Zuordnungsraum wird also typischerweise nur in dem Bereich exploriert, in dem er gültige Zuordnungen im Sinne gegebener Rahmenbedingungen aufweist. Ein Problem lokaler Suchverfahren ist, dass sie in ein lokales Minimum geraten können, aus dem sie nicht mehr herauskommen. Es gibt jedoch, wie beschrieben wird, Heuristiken, die ein Steckenbleiben in einem lokalen Minimum zu umgehen versuchen, auch wenn diese nicht garantieren, ein globales Minimum zu finden.

In einigen Ausführungsformen wird zum Finden einer möglichst guten Zuordnung eine Hill-Climbing-Suchstrategie (vgl. z.B. Russell, S., Norvig, P. "Artificial Intelligence-A Modern Approach", S. 111-112, Prentice Hall, 1995) verwendet. Um ein Minimum zu finden, geht die Suche ausgehend von einem zufälligen Startwert in jedem Elementarschritt in den Nachbarspunkt mit der geringsten Bewertung über. Das Übergehen in Punkte mit minimaler Bewertung geschieht solange, bis die minimale Bewertung aller Nachbarpunkte höher ist als die Bewertung des aktuellen Punktes, d.h. alle Nachbarpunkte haben eine höhere Bewertung als der aktuelle Punkt, was wiederum bedeutet, dass der aktuelle Wert ein lokales Minimum darstellt. Wenn dieser Fall eintritt, wird der aktuelle Punkt als Ergebnis der Suche zurückgegeben. Um nicht in ein relativ hohes Minimum zu geraten, wiederholt man die Hill-Climbing Suchstrategie, indem man von einer Reihe zufällig ausgewählter Startpunkte die Suche startet und das niedrigste aller gefundenen Minima auswählt (Random-Restart Hill-Climbing).

In anderen Ausführungsformen wird zum Finden eines (möglichst guten) Minimums der Zielfunktion ein sog. Simulated-Annealing-Verfahren (vgl. z.B. Russell, S., Norvig, P. "Artificial Intelligence-A Modern Approach", S. 113-114, Prentice Hall, 1995) verwendet. Die Idee des Simulated Annealing geht zurück auf Computersimulation von Abkühlungsvorgängen bestimmter Materialien (Spingläser), die bei hoher Temperatur flüssig sind (hohe Molekülbeweglichkeit) und durch vorsichtiges Abkühlen (annealing) eine gleichmäßige Gitterstruktur mit minimaler Energie erhalten. Bei dem Verfahren wird zunächst ein Temperaturschedule festgelegt wird, der für jeden Optimierungsschritt einen Temperaturwert festlegt. Der Temperaturschedule beschreibt einen Abkühlvorgang mit sinkenden Temperaturen. Im Rahmen der Analogie zum Abkühlvorgang bedeuten hohe Temperaturen größere Schrittweiten, und niedrigere Temperaturen kleinere Schrittweiten. Das Verfahren führt also zunächst eine großräumigere Suche durch, die nach und nach verfeinert wird. Zu Beginn des Verfahrens wird eine zu optimierende Ausgangszuordnung bewertet. Auf dieser Ausgangszuordnung wird ein Zug durchgeführt, indem man die Ausgangszuordnung verändert und bewertet. Man wählt dazu zufällig einen der Nachbarpunkte der gemachten Zuordnung aus und vergleicht dessen Wert mit dem Bewertungswert der aktuellen Zuordnung. Liefert der zufällig ausgewählte Nachbarpunkt einen niedrigeren Wert, so geht man im Zuordnungsraum auf diesen Punkt über. Liefert der Nachbarpunkt jedoch eine schlechtere Bewertung, so geht man nur mit einer gewissen Wahrscheinlichkeit in diesen Punkt über. Die Übergangswahrscheinlichkeit hängt von der für den aktuellen Optimierungsschritt festgelegten Temperatur im Temperaturschedule ab und von der Größe der Verschlechterung, die man durch den Übergang in den neuen Zustand eingeht. Da die Temperatur zu Beginn noch höher ist und im Laufe des Verfahrens gesenkt wird, sind Übergänge in einen schlechteren Zustand zu Beginn eher wahrscheinlich als zu einem späteren Zeitpunkt. Mit abnehmender Temperatur bleibt das Simulated Annealing Verfahren, falls eine zufällig ausgewählte Zuordnung ein schlechteres Bewertungsergebnis liefert, vorzugsweise im aktuellen Zustand und geht keine Verschlechterung ein. Das Simulated Annealing Verfahren verhindert, dass man relativ bald in einem lokalen Minimum hängen bleibt. Das Optimierungsverfahren endet, nachdem eine festgelegte Anzahl von Optimierungsschritten durchgeführt worden ist.

In anderen Ausführungsformen werden genetische Algorithmen (vgl. Russell, S., Norvig, P. "Artificial Intelligence-A Modern Approach", S. 619-621, Prentice Hall, 1995) für das Erstellen eines Einsatzplanes für Mitarbeiter eingesetzt. Genetische Algorithmen sind Verfahren, die eine Lösung zu einem nicht analytisch lösbaren Problem finden. Im Fall von zu optimierenden Einsatzplänen werden bei genetischen Algorithmen Mitarbeiterzuordnungen solange verändert und miteinander kombiniert, bis eine Zuordnung den gestellten Anforderungen entspricht, also eine bestimmte Qualität aufweist. Die Grundidee genetischer Algorithmen ist, in Anlehnung an biologische Evolutionsvorgänge, eine Anzahl Lösungskandidaten (Individuen, hier: Zuordnungen) zufällig zu erzeugen und diejenigen auszuwählen, die einer bestimmten Zuordnungsqualität am besten entsprechen. Die Zuordnungen werden dann leicht verändert und miteinander kombiniert, um neue Zuordnungen (eine neue Generation) zu erzeugen. Der typische genetische Algorithmus umfasst die folgenden Schritte:

1. Initialisierung: Erzeugen einer ausreichend großen Menge unterschiedlicher Zuordnungen.
2. Evaluation: Für jede einzelne Zuordnung wird anhand der Zielfunktion (in diesem Zusammenhang auch Fitness-Funktion genannt) eine Bewertung bestimmt.
3. Selektion: Zufällige Auswahl von Zuordnungen aus der vorhandenen Menge von Zuordnungen. Dabei werden Zuordnungen mit besseren Zielfunktionswerten mit einer höheren Wahrscheinlichkeit ausgewählt.
4. Rekombination: verschiedene Zuordnungen werden kombiniert und aus den neuen Zuordnungen eine neue Generation von Zuordnungen erzeugt (Vermehrung).
5. Mutation: Auf den Zuordnungen der neuen Generation werden zufällig Veränderungen durchgeführt.

6. Nach einem bestimmten Verfahren wird die Menge der neuen Zuordnungen aus der Menge der alten Zuordnungen und der Menge der mutierten Nachfolger der Gewinner der Menge der alten Zuordnungen gebildet. Der Algorithmus wird anschließend ab Schritt 2 wiederholt, oder nach einem Abbruchkriterium beendet und die am qualitativ hochwertigsten bewertete Zuordnung als Einsatzplan definiert.

In noch anderen Ausführungsformen wird die sog. Tabusuche zum Finden eines Minimums der Zielfunktion verwendet. Dazu wird die Zielfunktion ausgehend von einem Startwert exploriert. Ausgehend von dem Startwert werden nun alle benachbarten Punkte im Suchraum mittels einer Zielfunktion bewertet. Der Startwert (die Ausgangszuordnung) wird anfangs einer Variablen "lösung" und einer Variablen "beste_lösung" zugewiesen. Ferner führt man eine Tabuliste, in die alle Punkte eingetragen werden, die man bereits besucht hat und nun nicht mehr besuchen darf. In diese Liste trägt man anfangs den Startwert ein. Derjenige Nachbar des Startwerts, der von der Zielfunktion die geringste Bewertung erhält, wird als neue "lösung" angesehen, das Verfahren geht in diesen Punkt über und der Punkt wird in die Tabuliste eingetragen. Sollte die Bewertung des Nachbarn kleiner sein als "beste_lösung", so wird die Nachbarzuordnung auch der Variablen "beste_lösung" zugewiesen. Von diesem Nachbarspunkt ausgehend, betrachtet man wiederum dessen Nachbarspunkte und geht in den Punkt über, der die geringste Bewertung hat und nicht in der Tabuliste aufgeführt ist. Man beachte, dass man zwar in den Nachbarspunkt mit der geringsten Bewertung übergeht, allerdings muss dieser Punkt nicht unbedingt eine Bewertung geringer als der Punkt haben, in dem man sich augenblicklich befindet. Auf diese Weise kann man sich aus einem lokalen Minimum herausbewegen, da man in keinen Punkt übergehen darf, den man bereits besucht hat (und sich damit in der Tabuliste befindet). Wenn also der Punkt unter den Nachbarn mit der geringsten Bewertung in der Tabuliste steht, dann geht man in den Nachbarspunkt mit der geringsten Bewertung, der sich nicht in der Tabuliste befindet. In der Variablen "beste_lösung" merkt man sich unter allen besuchten Punkten denjenigen, der die geringste Bewertung erhalten hat. Diese Zuordnung wird als Einsatzplan zurückgegeben.

In anderen Ausführungsformen wird ein Branch-and-Bound Verfahren zum Erstellen eines optimierten Einsatzplanes verwendet. Das Branch-and-Bound Verfahren besteht im Grunde aus zwei Operationen. Im Branching-Schritt des Verfahrens wird das Zuordnungsproblem in disjunkte Teilprobleme aufgeteilt. Im Bounding-Schritt werden dann diejenigen Teilprobleme eliminiert, die im Vergleich zur derzeit besten Lösung keine Verbesserung versprechen. Beginnend mit dem Ursprungsproblem werden beide Schritte solange wiederholt, bis alle Probleme eliminiert sind und eine optimale Lösung gefunden ist. Das Verfahren kann man sich am besten am Beispiel eines Baumes vorstellen. Man erzeugt schrittweise ein Lösungsbaum und man berechnet eine Schranke an jedem Knoten. Dann werden die Äste eliminiert, die zu keinem Erfolg führen können.

Im Folgenden werden die zwei oben bereits angesprochenen Varianten des oben allgemein beschriebenen Verfahrens zur Erstellung von Einsatzplänen für Mitarbeiter mit Ein- oder Mehrfachqualifikation erläutert. Die beiden Varianten unterscheiden sich darin, dass in der ersten Variante der Gesamtmitarbeiterbedarf vor der Iteration des Optimierungsverfahrens nur einmal berechnet wird, also sozusagen global approximiert wird, wohingegen in der zweiten Variante der Gesamtmitarbeiterbedarf im Sinne eines für die jeweils zu testende Zuordnung tatsächlichen Bedarfs in jedem Optimierungsschritt berechnet wird.

Wir unterscheiden im folgenden zwei verschiedene Arten von Aktivitäten, nämlich sog. "Mehrfachaktivitäten" und sog. "Normalaktivitäten". Eine Mehrfachaktivität ist eine gedachte Bündelung von Aktivitäten, in diesem Zusammenhang auch Unteraktivitäten genannt, auf die man Mitarbeiter mit Ein- und Mehrfachqualifikationen zuordnet. Es ist also nicht etwa so, dass nur Mitarbeiter, die alle Qualifikationen der Aktivitäten der Mehrfachaktivität erledigen können, auf diese zugeordnet werden. Vielmehr können auch Mitarbeiter, die nur für eine Teilmenge der Aktivitäten (also mehrere oder nur eine der Aktivitäten der Mehrfachaktivität) qualifiziert sind, auf eine Mehrfachaktivität zugeordnet werden. Man beachte, dass der Begriff der Mehrfachaktivität nicht impliziert, dass die zu einer Mehrfachaktivität gehörenden Unteraktivitäten gleichzeitig ausgeführt werden. In der Regel stehen die Aktivitäten einer Mehrfachaktivität in einem organisatorischen oder semantischen Zusammenhang.

Bei beiden Varianten sind einige (Unter-)Aktivitäten zu einer Mehrfachaktivität zusammengefaßt. Bei der ersten Variante wird unter der Annahme, dass alle Mitarbeiter, die auf diese Mehrfachaktivität zugeordnet sind, für alle Aktivitäten dieser Mehrfachaktivität qualifiziert sind, ein Gesamtmitarbeiterbedarf berechnet. Dieser so berechnete Gesamtmitarbeiterbedarf stützt sich jedoch auf eine Annahme, die in der Realität häufig nicht zutrifft, so dass diese Berechnung des Gesamtmitarbeiterbedarfs zu einer Unterschätzung des Gesamtmitarbeiterbedarfs führt. Deshalb wird in einigen Ausführungsformen eine Anpassung des mit Gleichung (10) berechneten Gesamtmitarbeiterbedarfs vorgenommen, indem man die Qualifikationen sämtlicher Mitarbeiter, die für eine Zuordnung auf eine Mehrfachaktivität zur Verfügung stehen in die Berechnung des Gesamtmitarbeiterbedarfs mit einbezieht. Diese Anpassung des Gesamtmitarbeiterbedarfs kann z.B. mit der weiter unten erklärten Approximationsformel (39) der zweiten Variante geschehen. Man beachte, dass eine derartige Anpassung des Gesamtmitarbeiterbedarfs in der ersten Variante, im Gegensatz zur zweiten Variante, nur einmal vor Beginn des Suchverfahrens durchgeführt wird. Außerdem wird für jede einzelne Aktivität der Mehrfachaktivität ein Mitarbeiterbedarf (Aktivitätsmitarbeiterbedarf) berechnet unter der Annahme, dass jeder Mitarbeiter nur für eine Aktivität qualifiziert ist. Der Gesamtmitarbeiterbedarf der Mehrfachaktivität ist dabei kleiner als die Summe der Mitarbeiterbedarfe der Aktivitäten der Mehrfachaktivität. Neben dem bereits oben nach Formel 10 erwähnten Term, der Zuordnungen umso qualitativ hochwertiger bewertet, je kleiner der Unterschied zwischen der Anzahl der auf die Aktivitäten eingesetzten Mitarbeiter und dem berechneten Gesamtbedarf ist, verfügt die Zielfunktion in der ersten Variante über einen weiteren Term, der Zuordnungen umso qualitativ hochwertiger bewertet, je kleiner der Unterschied zwischen den für jede einzelne Aktivität berechneten Aktivitätsmitarbeiterbedarf und der Anzahl der auf die Mehrfachaktivität insgesamt zugeordneten Mitarbeiter ist. Dieser weitere Term verhindert, dass lediglich Zuordnungen mit einem minimalen Gesamtmitarbeiterbedarf als qualitativ hochwertig angesehen werden, sondern, dass ferner die Abdeckung der Unteraktivitäten mit in die Optimierung einbezogen wird.

Bei der zweiten Variante wird hingegen für die in jedem Optimierungsschritt zugeordneten Mitarbeiter und damit festgelegten Qualifikationen ein Bedarfswert berechnet, der berücksichtigt, welcher Anteil der Mitarbeiter, die in einem Optimierungsschritt auf die Mehrfachaktivität zugeordnet wurden, für eine Aktivität qualifiziert ist. Dieser Bedarfswert orientiert sich an den tatsächlichen anhand einer konkreten Mitarbeiterzuordnung festgelegten Qualifikationen und kann deshalb als Approximation des tatsächlichen Mitarbeiterbedarfs für eine in eine in einem Optimierungsschritt generierte Zuordnung aufgefaßt werden. Die in jedem Optimierungsschritt durchgeführte Berechnung dieses Approximationswertes stützt sich bei manchen Ausführungsformen auf die - wie bei der ersten Variante einmal vorab zu berechnenden - Bedarfswerte für die Randsituationen, dass alle Mitarbeiter für alle Aktivitäten qualifiziert sind und, dass alle Mitarbeiter nur für eine einzige Aktivität qualifiziert sind. Der Approximationswert wird in der Zielfunktion in jedem Optimierungsschritt mit der Gesamtzahl an Mitarbeitern, die auf die Mehrfachaktivität zugeordnet werden, verglichen. Je geringer diese Differenz ist, umso qualitativ hochwertiger wird die Zuordnung bewertet.

Bei der zweiten Variante entfällt bei einigen Ausführungsformen die Überprüfung, inwieweit die Mitarbeiterbedarfe der Unteraktivitäten durch die Zuordnung abgedeckt werden, da diese Information schon indirekt mittels der Approximation des tatsächlichen Mitarbeiterbedarfs in die Optimierung einfließt. Dennoch kann es sinnvoll sein, die Abdeckung der Mitarbeiterbedarfe der Unteraktivitäten in die Bewertungsfunktion mit einzubeziehen. Dieser Term vergibt dann Strafpunkte, falls einzelne Mitarbeiterbedarfe von Unteraktivitäten nicht ausreichend von der gewählten Zuordnung abgedeckt werden.

In einigen Ausführungsformen gibt es neben den Mehrfachaktivitäten auch noch die "Normalaktivitäten". Diese bestehen aus genau einer Aktivität. Sie stehen nicht mit anderen Aktivitäten in Zusammenhang und sind als davon getrennt zu betrachten. Bei manchen Ausführungsformen bilden die Menge der Mehrfachaktivitäten und die Menge der Normalaktivitäten zwei disjunkte Mengen, wohingegen ein Mitarbeiter mit einer Mehrfachqualifikation sowohl für eine Aktivität innerhalb einer Mehrfachaktivität als auch für eine oder mehrere Normalaktivitäten qualifiziert sein kann. Allerdings kann bei einigen Ausführungsformen ein Mitarbeiter nur entweder auf eine Normalaktivität oder auf eine Mehrfachaktivität zugeordnet werden. In einigen Ausführungsformen - sowohl in der ersten als auch in der zweiten Variante - ist hinsichtlich der Normalaktivitäten in der Zielfunktion ein Term vorgesehen, der die Abdeckung der Mitarbeiterbedarfe der Normalaktivitäten mit in die Optimierung einbezieht. Dieser Term liefert eine Bewertung, der eine Zuordnung als umso qualitativ hochwertiger bewertet, je kleiner der Unterschied zwischen den für jede Normalaktivität berechneten Aktivitätsmitarbeiterbedarf und der Anzahl der auf die Normalaktivität zugeordneten Mitarbeiter ist.

Die Mitarbeiterbedarfe sind über den Zeitraum hinweg, über dem ein Einsatzplan erstellt werden soll, nicht konstant. Deshalb wird dieser längere Zeitraum in kürzere Zeitintervalle unterteilt, innerhalb derer man einen konstanten Mitarbeiterbedarf für die jeweiligen Aktivitäten annimmt. Bei Ausführungsformen im Call Center Bereich ist dieses Zeitintervall häufig in der Größenordnung von 15 Minuten. Man beachte, dass die Zuordnung von Mitarbeitern auf Zeitintervallen einigen Randbedingungen gehorchen muss, da z.B. die Mitarbeiterarbeitszeit an gesetzliche Rahmenbedingungen und die Arbeitsverträge der Mitarbeiter (z.B. Teilzeit oder Vollzeit) gebunden ist. Ferner haben die Mitarbeiter ein Interesse daran, ihre Arbeit an einem Stück ohne Unterbrechungen - abgesehen von Pausenzeiten - zu leisten. Wie oben bereits beschrieben, werden im Anordnungsraum nur Anordnungen berücksichtigt, die den Randbedingungen genügen.

In einigen Ausführungsformen ist es vorgesehen, dass Mitarbeiter manuell auf Aktivitäten zugewiesen werden können. Diese Mitarbeiter sind dann fix zugeteilt und können vom Optimierungsverfahren nicht mehr von dieser Aktivität entfernt werden, obwohl es evtl. günstiger wäre, sie in einem anderen Zeitintervall zu verplanen. Die manuelle Zuordnung von Mitarbeitern auf Aktivitäten erlaubt es, dass z.B. Gruppen- bzw. Schichtleiter fest zugeteilt werden, so dass zu jedem Zeitintervall ein Gruppenleiter anwesend ist. Die manuell gemachten Mitarbeiterzuordnungen sind also optimierungsunabhängig.

Call Center verfügen typischerweise über einen oder mehrere Telefonanrufrouter innerhalb eines Automatic Call Distribution (ACD) System, das dafür zuständig ist, die ankommenden Anrufe gemäß einer vorgegebenen und den Anforderungen angepaßten Weise an Arbeitsplätze zu verteilen. Ein ACD System umfasst neben einem Telefonanrufrouter noch weitere Komponenten z.B. eine Statistik-Einheit, in der statistische Aufzeichnungen über die ankommenden Telefonanrufe gemacht werden. Der Telefonanrufrouter ist das Kernstück des ACD Systems. Er ist entweder Bestandteil der Telefonanlage (integriertes ACD-System) oder durch Kopplung (zum Beispiel LAN) mit der Anlage verbunden (adaptiertes System). Hier erfolgt die Entscheidung über die Weiterverteilung der Gespräche gemäß den Vorgaben, die Zusammenfassung aller betriebsrelevanten Zustände (z.B. Zustände der Agententelefone, Anzahl der zur Zeit zur Verteilung anstehenden Telefongespräche). Um die Verteilung der Anrufe an die Arbeitsplätzen vornehmen zu können, ist in einigen Ausführungsformen ein Telefonanrufrouter vorgesehen, der einen anhand des oben beschriebenen Verfahrens erstellten Einsatzplan zur Verfügung hat. Damit weiß der Telefonanrufrouter zu jedem Zeitpunkt, wie viele Mitarbeiter für einen eingehenden Telefonanruf zur Verfügung stehen, die den Anruf beantworten können. Der Telefonanrufrouter leitet dann den Anruf anhand des Einsatzplanes an eine Person weiter.

Detaillierte Ausführungsbeispiele:

Im Folgenden werden Ausführungsbeispiele für beide Varianten detailliert dargestellt Hierfür werden vier Objekte verwendet: Mitarbeiter $E$, Qualifikationen $Q$, Aktivitäten $A$ und Mehrfachaktivitäten $MA$. Bei den Aktivitäten wird zwischen Aktivitäten, die einer Mehrfachaktivität zugeordnet sind ($A_{MA}$) und Normalaktivitäten (AN), die nicht einer Mehrfachaktivität zugeordnet sind, unterschieden. Im Bereich der Personaleinsatzplanung besitzen Mitarbeiter E eine oder mehrere Qualifikationen $Q$. Durch die Zuordnung von Qualifikationen $Q$ zu Aktivitäten $A$ ergibt sich, dass eine oder mehrere Aktivitäten implizit Mitarbeitern zugeordnet sind.

Variablen und Kennzahlen

Um das Modell und später das Einsatzplanungsverfahren einschließlich Zielfunktion präziser beschreiben zu können, werden an dieser Stelle mehrere Variablen eingeführt, die kombiniert drei wichtige Kennzahlen ergeben. Das hier beschriebene Verfahren ist nicht an diese Kennzahlen gebunden; sie dienen lediglich der vereinfachten Darstellung des Einsatzplanungsverfahrens.

Verwendete Variablen

Bedarf je Aktivität einer Mehrfachaktivität:

$$R_{A_{MA}}(t) \qquad\qquad (11)$$

Diese Variable beschreibt den Mitarbeiterbedarf für eine Aktivität A, die einer Mehrfachaktivität $MA$ zugeordnet ist, zum Zeitpunkt $t$.

Anzahl Mitarbeiter je Aktivität einer Mehrfachaktivität; verfahrensunabhängig

$$E_{A_{MA}}(t) \qquad\qquad (12)$$

Diese Variable beschreibt die Anzahl aller Mitarbeiter $E$, die zum Zeitpunkt $t$ auf die Aktivität $A_{MA}$ verplant sind. Dieser Wert ist nicht von dem aktuellen Optimierungsschritt des Verfahrens abhängig, da die Optimierung, für den Fall, dass ein Mitarbeiter eine Aktivität $A_{MA}$ übernehmen soll, den Mitarbeiter automatisch intern auf die entsprechende Mehrfachaktivität $MA$ setzt.

Anzahl Mitarbeiter je Aktivität einer Mehrfachaktivität; verfahrensabhängig

$$E_{MA \times A_{MA}}(t) \qquad\qquad (13)$$

Diese Variable beschreibt die Anzahl aller Mitarbeiter $E$, die zum Zeitpunkt $t$ auf die Mehrfachaktivität $MA$ verplant sind und die zudem die Aktivität $A_{MA}$ gemäß ihrer Qualifikationen übernehmen könnten. Dieser Wert ist von dem aktuellen Optimierungsschritt des Verfahrens abhängig.

Verfügbare Kapazität:

$$C_{A_{MA}}(t) \qquad\qquad (14)$$

Diese Variable beschreibt die Anzahl der aktuell verfügbaren Kapazität für eine Aktivität einer Mehrfachaktivität. Damit ist das Arbeitspotential von allen Mitarbeitern gemeint, die zum Zeitpunkt $t$ die Aktivität $A_{MA}$ übernehmen können. Die Aktivität $A_{MA}$ ist dabei einer Mehrfachaktivität $MA$ zugeordnet; dies bedeutet, dass nur die Kapazität von Aktiväten, die Mehrfachaktivitäten zugeordnet sind, berechnet wird. Konkret wird dieser Wert aus der Summe aller Mitarbeiter gebildet, die im Zeitabschnitt t die Aktivität $A_{MA}$ entweder durch direkte Zuordnung des Benutzers bereits übernehmen oder durch das Optimierungsverfahren beim aktuellen Optimierungsschritt die Mehrfachaktivität $MA$ übernehmen und durch ihre Qualifikation die Aktivität $A_{MA}$ übernehmen könnten.
Unter Zuhilfenahme von (12) und (13) ergibt sich:

$$C_{A_{MA}}(t) = E_{A_{MA}}(t) + E_{MA \times A_{MA}}(t) \qquad\qquad (15)$$

Dies bedeutet ebenfalls, dass Mitarbeiter, die im Zeitabschnitt t einer Mehrfachaktivität $MA$ zugeordnet sind, dabei für jede Aktivität $A_{MA}$ die sie übernehmen können, in die entsprechende Kapazitätsberechnung eingehen.
Bedarf je Mehrfachaktivität:

$$R_{MA}(t) \qquad\qquad (16)$$

Diese Variable beschreibt den Mitarbeiterbedarf für eine Mehrfachaktivität $MA$ zum Zeitpunkt t. Dieser Wert wird entsprechend Gleichung (10) aus den Mitarbeiterbedarfen $R_{A_{MA}}$ der Unteraktivitäten gebildet. Wie bereits erwähnt wurde, bezieht sich diese Variable in der ersten Variante nicht nur auf den Mitarbeiterbedarf unter der Annahme, dass alle Mitarbeiter für alle Aktivitäten qualifiziert sind, sondern bezieht sich in einigen Ausführungsformen auch auf Anpassungen des Mitarbeiterbedarfs an tatsächlich vorhandene Mitarbeiterqualifikationen. In einigen Ausführungsformen der ersten Variante bezieht sich diese Variable auf die Qualifikationen sämtlicher Mitarbeiter, die für die Zuordnung auf eine Mehrfachaktivität zur Verfügung stehen.
Anzahl Mitarbeiter einer Mehrfachaktivität:

$$E_{MA}(t) \qquad\qquad (17)$$

Diese Variable beschreibt die Anzahl aller Mitarbeiter E, die zum Zeitpunkt $t$ auf die Mehrfachaktivität $MA$ verplant sind. Dieser Wert ist von dem aktuellen Optimierungsschritt des Verfahrens abhängig, da die Optimierung Mitarbeiter intern immer auf die Mehrfachaktivität $MA$ setzt und verplant, die zum Zeitpunkt $t$ mindestens eine Aktivität $A_{MA}$ übernehmen sollen.
Bodies on Chair:

$$BOC_{MA}(t) \qquad\qquad (18)$$

Diese Variable beschreibt die aktuelle Anzahl der Mitarbeiter E, die zum Zeitpunkt t bereits verplant wurden und eine Mehrfachaktivität $MA$ oder Aktivität $A_{MA}$ bereits zugewiesen bekommen haben. Unter Berücksichtigung der Variablen (17) und (12) ergibt sich:

$$BOC_{MA}(t) = E_{MA}(t) + E_{A_{MA}}(t) \qquad (19)$$

Bedarf je Normalaktivität:

$$R_{A_N}(t) \qquad (20)$$

Diese Variable beschreibt den Mitarbeiterbedarf für eine Normalaktivität $A_N$ zum Zeitpunkt $t$, die also nicht einer Mehrfachaktivität $MA$ zugeordnet ist.

Staff:

$$S_{A_N}(t) \qquad (21)$$

Diese Variable beschreibt die Anzahl der Mitarbeiter E, die zum Zeitpunkt t von dem Optimierungsverfahren bereits auf die Aktivität $A_N$ verplant wurden.

Gebildete Kennzahlen

Aktuelle Kapazitätsbilanz:

$$R_{A_{MA}}(t) - C_{A_{MA}}(t) \qquad (22)$$

Diese Kennzahl beschreibt die aktuelle Bilanz zum Zeitpunkt t aus dem Mitarbeiterbedarf $R$ einer Unteraktivität $A_{MA}$ und der vorhandenen Menge an Mitarbeiterkapazität C für dieselbe Unteraktivität. Diese Differenz gibt also den aufgrund der Kapazität der Mitarbeiter noch zu deckenden Bedarf für eine Unteraktivität $A_{MA}$. Der Wert ist Zeitintervall-gebunden und ist von dem Optimierungsschritt des Verfahrens abhängig.

Aktuelle Mitarbeiterbilanz für Normalaktivitäten:

$$R_{A_N}(t) - S_{A_N}(t) \qquad (23)$$

Diese Kennzahl beschreibt die Bilanz für Aktivitäten, die nicht einer Mehrfachaktivität zugeordnet sind $(A_N)$, aus dem Mitarbeiterbedarf $R$ und den zum Zeitpunkt $t$ bereits auf diese Aktivitäten verplanten Mitarbeitern (Staff $S$). Diese Differenz gibt den noch zu deckenden Bedarf an Mitarbeitern pro Aktivität $A_N$ an und ist vom Optimierungsschritt abhängig.

Aktuelle Mitarbeiterbilanz für Mehrfachaktivitäten:

$$R_{MA}(t) - BOC_{MA}(t) \qquad (24)$$

Diese Kennzahl entspricht dem noch zu deckenden Mitarbeiterbedarf für eine Mehrfachaktivität $MA$ zum Zeitpunkt $t$. Dabei wird die Differenz zwischen dem Mitarbeiterbedarf für eine Mehrfachaktivität $R_{MA}$ und der Anzahl an Mitarbeitern, die die Mehrfachaktivität $MA$ oder eine der untergeordneten Aktivitäten $A_{MA}$ übernehmen, gebildet. Dieser Wert wird in Abhängigkeit der Mehrfachaktivität und des Zeitpunkts $t$ angegeben und wird durch den aktuellen Optimierungsschritt beeinflusst.

Bedarfs- und Kapazitätsberechnungen

Bedarfsberechnung

Der Bedarf, der für die hier beschriebenen Ausführungsformen des Einsatzplanungsverfahrens von Bedeutung ist, ist der der Mitarbeiter bezogen auf die Aktivitäten und/oder Mehrfachaktivitäten, die die Mitarbeiter implizit durch ihre Qualifikationen übernehmen können.

Bei diesem Verfahren ist der Bedarf für die Mehrfachaktivitäten $MA$ von besonderer Bedeutung, da dieser aufgrund des Pooling-Effekts nicht zwangsläufig der Summe der Bedarfe der untergeordneten Aktivitäten $A_{MA}$ entspricht.

In der Personaleinsatzplanung bedeutet dies, dass der Bedarf für Mehrfachaktivitäten so gehandhabt wird wie der Bedarf normaler Aktivitäten $A$. Dabei handelt es sich allgemein um Mitarbeiterbedarf $R$ für die angegebene Aktivität ($A_N$ oder $A_{MA}$) oder Mehrfachaktivität ($MA$).

Der Bedarf der Mehrfachaktivitäten ist dabei kleiner oder gleich der Summe aller Bedarfe aller untergeordneten Aktivitäten, da Mitarbeiter, die durch ihre Qualifikationen zu mehreren Aktivitäten befähigt sind, in Abhängigkeit des Aktivitäts-Typs, diese auch gleichzeitig ausüben könnten. Da gerade solche Aktivitäten zu Mehrfachaktivitäten zugeordnet werden, gilt

$$R_{MA} \leq \sum_{A_{MA}} R_{A_{MA}} \tag{25}$$

In dem Raum zwischen $R_{MA}$ (wobei $R_{MA}$ den Mitarbeiterbedarf angibt, unter der Annahme, dass alle Mitarbeiter für alle Aktivitäten qualifiziert sind oder in einer modifizierten Form tatsächlich vorhandene Mitarbeiterqualifikationen mit einbeziehst) und $\sum_{A_{MA}} R_{A_{MA}}$ bewegt sich somit der Optimierungsbereich.

Die Arbeitskraft eines jeden Mitarbeiters wird dabei um die Anzahl der Aktivitäten pro Mehrfachaktivität multipliziert und z.B. nach ErlangC in der Personalbedarfs-Berechnung (verstärkt) berücksichtigt. Würden alle Mitarbeiter sämtliche Aktivitäten pro Mehrfachaktivität ausüben können, so würde der niedrigste Personalbedarf $R_{MA}$ erreicht werden.

Um den Term auf den Gesamt-Personalbedarf zu erweitern, müsste die Gleichung 25 um die Summe des Bedarfs all derjenigen Aktivitäten erweitert werden, die nicht zu einer der Mehrfachaktivitäten zugeordnet sind (vgl. Gleichung 20), die allerdings von mindestens einem Mitarbeiter der Planungseinheit übernommen werden können. Nach der Erweiterung um $\sum_{A_N} R_{AN}$ gilt für den Gesamt-Personalbedarf also

$$\sum_{A_N} R_{AN} + R_{MA} \leq \sum_{A_N} R_{AN} + \sum_{A_{MA}} R_{A_{MA}} \; . \tag{26}$$

Kapazitätsberechnung

Von Bedeutung für den Ablauf dieses Verfahrens ist zudem noch die Kapazitätsberechnung. Diese wird durch die Arbeitskraft eines jeden Mitarbeiters und somit durch die Aktivitäten, die dieser übernehmen kann, beeinflusst. Die Berechnung wird auf Grundlage der Aktivitäten durchgeführt.

Die verfügbare Kapazität $C$ für eine Aktivität einer Mehrfachaktivität $A_{MA}$ wird aus der Summe aller Mitarbeiter gebildet, die auf die Aktivität $A_{MA}$ bereits verplant sind oder die Mehrfachaktivität $MA$ übernehmen und die untergeordnete Aktivität $A_{MA}$ aufgrund ihrer Qualifikationen übernehmen könnten. Hierbei ist zu beachten, dass die Mitarbeiter inklusive eines Leistungsindex in der Kapazitätsberechnung berücksichtigt werden.

Der Leistungsindex ist ein prozentualer Wert, der in Abhängigkeit der Qualifikationen je Mitarbeiter pro Aktivität unterschiedlich ausfallen kann. Dieser kann Werte zwischen 0% und 100% annehmen und geht als Faktor umgerechnet (von 0.0 bis 1.0) ausschließlich in die Kapazitätsberechnung ein.

Optimierungsverfahren

Grundsätzlich werden beim Optimierungsvorgang zwei verschiedene Zielfunktionsterme berücksichtigt. Diese bilden sich aus den oben beschriebenen Kennzahlen.

Der erste Zielfunktionsterm beschreibt, wie übliche Aktivitäten $A_N$ behandelt werden sollen, der zweite, wie Mehrfachaktivitäten $A_{MA}$ behandelt werden. Zusätzlich wird gegebenenfalls für die Behandlung der Mehrfachaktivitäten eine Bedingung hinzugefügt.

Im Folgenden wird eine Zielfunktion für die 1. Variante des Optimierungsverfahrens erläutert. Die hier betrachtete Zielfunktion hat drei Terme.

1. Term: Maximierung der Deckung für eine Normalaktivität $A_N$

$$\left( \frac{R_{A_N}(t) - S_{A_N}(t)}{R_{A_N}(t)} \right)^2 \to 0 \tag{27}$$

Durch diesen Zielfunktionsterm soll sichergestellt werden, dass der Mitarbeiterbedarf für Normalaktivitäten $A_N$, also solche Aktivitäten, die nicht einer Mehrfachaktivität zugeordnet sind, möglichst gut abgedeckt wird. Hierfür werden der Bedarf und die vom Optimierungsschritt abhängige Besetzung für dieselbe Aktivität verwendet. Wenn z.B. alle Mitarbeiter einer Mehrfachaktivität zugeordnet sind, entfällt dieser Term.

2. Term: Maximierung der Deckung für eine Mehrfachaktivität:

$$\left( \frac{R_{MA}(t) - BOC_{MA}(t)}{R_{MA}(t)} \right)^2 \to 0 \tag{28}$$

Durch diesen Zielfunktionsterm soll sichergestellt werden, dass eine Mehrfachaktivität *MA* möglichst gut gedeckt wird. Im Gegensatz zum Zielfunktionsterm für Normalaktivitäten wird hier statt der normalen Besetzung (Statt *S*) die Besetzung derjenigen Mitarbeiter verwendet, die auf die Mehrfachaktivität *MA* oder auf eine der untergeordneten Aktivitäten $A_{MA}$ verplant sind (Bodies on Chair *BOC*). Auch dieser Wert ist von dem Optimierungsschritt abhängig, da die Anzahl der auf die Mehrfachaktivität verplanten Mitarbeiter davon abhängt. Da durch die Optimierung keine einzelnen Aktivitäten einer Mehrfachaktivität $A_{MA}$ vergeben werden, können Mitarbeiter nur über vorherige Eingaben (z.B. durch einen Planer) auf eine solche Aktivität festgesetzt worden sein. Dies bedeutet, dass der Wert $E_{A_{MA}}(t)$ (siehe Formel 19) nicht von dem Optimierungsschritt abhängig ist. Die einzige Komponente, die vom Optimierungsschritt abhängt, ist also die Besetzung für die Mehrfachaktivität $E_{MA}(t)$.

Man beachte, dass in einigen Ausführungsformen der Wert $R_{MA}$ mit einem Korrekturfaktor, der tatsächlich vorhandene Mitarbeiterqualifikationen berücksichtigt, in die Berechnung eingeht und den Wert $R_{MA}$ somit erhöht. Dies ist darin begründet, dass der Wert $R_{MA}$ ohne Korrekturfaktor eine Unterschätzung des Mitarbeiterbedarfs liefert, da er sich auf den Fall bezieht, dass alle Mitarbeiter für alle Aktivitäten qualifiziert sind. Diese Anpassung des Wertes $R_{MA}$ geschieht jedoch nur einmal, im Gegensatz zur zweiten Variante, bei der ein Mitarbeiterbedarf für jede generierte Zuordnung anhand der in dieser Zuordnung vorkommenden Qualifikationen berechnet wird.

3. Term: Abdeckung der Aktivitätsmitarbeiterbedarfe:

Es gilt folgende Bedingung zur Maximierung der Deckung für eine Mehrfachaktivität

$$C_{A_{MA}}(t) \geq R_{A_{MA}}(t) \tag{29}$$

Zu jedem Optimierungsschritt sollte bei der Vergabe eines Mitarbeiters auf die Mehrfachaktivität *MA* sichergestellt sein, dass die obige Bedingung für jede Unteraktivität $A_{MA}$ erfüllt ist.
Hierzu dient der folgende dritte Zielfunktionsterm:

$$\left( \frac{R_{A_{MA}}(t) - C_{A_{MA}}(t)}{R_{A_{MA}}(t)} \right)^2 \to 0 \tag{30}$$

Durch diesen Zielfunktionsterm soll sichergestellt werden, dass der Bedarf für jede Aktivität einer Mehrfachaktivität $A_{MA}$ durch die vom Optimierungsschritt abhängige verfügbare Kapazität $C_{A_{MA}}$ möglichst gut abgedeckt wird. Bei der Berechnung der Kapazität C wird pro Aktivität für jeden Mitarbeiter der Leistungsindex berücksichtigt. Wie beschrieben, werden für diese Berechnung all die Mitarbeiter hinzugezogen, die auf die Aktivität $A_{MA}$ bereits im Vorfeld direkt verplant wurden, und auch diejenigen Mitarbeiter, die zum Optimierungsschritt auf die Mehrfachaktivität *MA* verplant werden und die Aktivität $A_{MA}$ gemäß ihrer Qualifikationen ausüben könnten.
Bei der Auswertung des dritten Zielfunktionsterms gilt zusätzlich folgendes: nur diejenigen Unteraktivitäten $A_{MA}$ werden in die Auswertung einbezogen, für die die Bedingung $C_{A_{MA}}(t) \geq R_{A_{MA}}(t)$ nicht erfüllt ist, andernfalls wird die entsprechende Unteraktivität $A_{MA}$ nicht berücksichtigt und geht mit dem Wert "0" in den Term ein. Mit anderen Worten vergibt der Term nur "Strafpunkte" für Unterdeckung, nicht jedoch für Überdeckung.
Es sind natürlich Szenarien denkbar, für die Bedingung 29 nicht erfüllt werden kann, z.B. dann, wenn alle Mitarbeiter, die eine Aktivität einer Mehrfachaktivität $A_{MA}$ ausüben könnten, zum aktuellen Optimierungsschritt auf eine normale Aktivität $A_N$ verplant werden, für die sie ebenfalls qualifiziert sind. Dieser Zustand könnte dadurch erreicht werden, dass der Bedarf für die normale Aktivität $A_N$ priorisiert behandelt wird, so dass der Bedarf für die Aktivität $A_{MA}$ nicht gedeckt werden könnte.

Ablauf:

Die soeben beschriebenen Zielfunktionsterme bilden zwei bzw. drei (unter Berücksichtigung der Bedingung zur Maximierung der Deckung für Mehrfachaktivitäten *MA*) verschiedene Werte. Für den Optimierungsvorgang wird hieraus ein einziger Zielwert für jeden Optimierungsschritt errechnet, damit das Ergebnis des letzten Zuges qualitativ bewertet werden kann. Das Optimierungsverfahren sollte nämlich nach jedem Optimierungsschritt eine Aussage über den Zustand der Deckung aller Aktivitäten treffen können. Dazu wird vereinfacht über alle Zielfunktionen und über alle Aktivitäten ein Wert gebildet. Dies stellt bei näherer Betrachtung der Terme keine Probleme dar, da alle zwei bzw. drei Zielfunktionen einen quadrierten, prozentualen Deckungswert der jeweiligen Aktivität liefern.
Unter Berücksichtigung einer Optimierung über alle Zeitabschnitte *t* gilt es also, den folgenden allgemeinen Ausdruck zu minimieren:

$$\sum_t \left( \sum_{A_N} \left( \frac{R_{A_N}(t) - S_{A_N}(t)}{R_{A_N}(t)} \right)^2 + \left( \frac{R_{MA}(t) - BOC_{MA}(t)}{R_{MA}(t)} \right)^2 + \sum_{A_{MA}} \left( \frac{R_{A_{MA}}(t) - C_{A_{MA}}(t)}{R_{A_{MA}}(t)} \right)^2 \right) \to 0 \tag{31}$$

Wie bereits erwähnt, ist im dritten Term hinsichtlich der Unteraktivitäten $A_{MA}$ Folgendes zu beachten: der Bereich des Ausdrucks, der sich auf die Unteraktivitäten bezieht, wird nur dann für diejenigen Unteraktivitäten $A_{MA}$ in diese Berechnung einbezogen, für die die Bedingung $C_{A_{MA}}(t) \geq R_{A_{MA}}(t)$ nicht erfüllt ist, andernfalls wird die entsprechende Unteraktivität $A_{MA}$ nicht berücksichtigt und geht mit dem Wert "0" in den dritten Term ein. Man beachte, dass in manchen Ausführungsformen die Zielfunktion (31) auch ohne den dritten Term eingesetzt wird. Der 3. Term ist vor allem dann sinnvoll, wenn der verwendete $R_{MA}$-Wert eine Unterschätzung des Gesamtmitarbeiterbedarfs darstellt (z.B. unter der Annahme, dass der $R_{MA}$ die Anzahl der Mitarbeiter angibt, wenn alle Mitarbeiter für alle Aktivitäten qualifiziert sind).

Im Folgenden wird auf die 2. Variante des Verfahrens näher erläutert.

Wie oben ausgeführt wurde, beruht die 1. Variante auf der (i.a. nicht zutreffenden) Annahme, dass alle Mitarbeiter maximal qualifiziert sind; entsprechend wird der Gesamtmitarbeiterbedarfs $R_{MA}$ für die Mehrfachaktivität *MA* einmalig berechnet und bei jedem Optimierungsschritt in der Gesamtzielfunktion verwendet. In dieser wird einerseits die Deckung in Richtung des theoretischen Minimalbedarfs der Mehrfachaktivität $R_{MA}$ (der gegeben wäre, wenn die Annahme der maximalen Mitarbeiterqualifikation zuträfe) bzw. in Richtung eines - wie oben beschrieben - angepaßten Wertes $R_{MA}$ optimiert; und andererseits die tatsächlich verfügbaren Qualifikationen und Kapazitäten auf der Ebene der einzelnen Unteraktivitäten berücksichtigt.

Bei der 2. Variante wird hingegen in jedem Optimierungsschritt der Mitarbeiterbedarf der Mehrfachaktivität $R_{MA}$ an die "Hybridsituation", d.h. an diejenige Kombination von Qualifikationen, die bei der im jeweiligen Optimierungsschritt vorgenommenen Mitarbeiterzuordnung vorliegt, angepasst, beispielsweise indem dieser Hybrid-Mitarbeiterbedarf in jedem Optimierungsschritt neu berechnet wird, oder indem in jedem Optimierungsschritt ein geeigneter Wert aus einer Tabelle mit bereits einmal vorberechneten Werten entnommen wird. Der letzte Zielfunktionsterm der 1. Variante, der Qualifikationen und Kapazitäten auf der Ebene der einzelnen Unteraktivitäten berücksicht, kann daher bei einigen Ausführungsformen der 2. Variante entfallen; bei anderen Ausführungsformen wird er hingegen auch bei der 2. Variante verwendet.

Variablen und Kennzahlen

Um die Zielfunktion präziser beschreiben zu können, werden an dieser Stelle wiederum einige Variablen definiert, die kombiniert drei Kennzahlen ergeben (teilweise entsprechen diese Definitionen und Kennzahlen denen der 1. Variante, wobei z.T. andere Benennungen verwendet werden). Die hier beschriebene Anpassung ist nicht an diese Kennzahlen gebunden; diese dienen lediglich der vereinfachten Darstellung dieser Verfahrensvariante.

Verwendete Variablen

Anzahl qualifizierter Mitarbeiter je Aktivität einer Mehrfachaktivität; verfahrensabhängig:

$$E_{Q(A_{MA})} \tag{32}$$

Diese Variable beschreibt die Anzahl aller Mitarbeiter E, die zur Ausübung der Aktivität $A_{MA}$ qualifiziert sind. Der Wert ist vom aktuellen Stand der Optimierung abhängig, d.h., dass nur diejenigen Mitarbeiter zur Summenbildung verwendet werden, die zum Optimierungsschritt verplant sind und die Aktivität $A_{MA}$ übernehmen könnten.

Anzahl Mitarbeiter einer Mehrfachaktivität (verfahrensabhängig):

$$E_{Q(MA, A_{MA})} \tag{33}$$

Diese Variable beschreibt die Summe aller Mitarbeiter E, die gemäß ihrer Qualifikationen mindestens eine der Aktivitäten $A_{MA}$ einer Mehrfachaktivität übernehmen können. Auch dieser Wert ist vom aktuellen Stand der Optimierung abhängig, d.h., dass nur diejenigen Mitarbeiter zur Summenbildung verwendet werden, die zum Optimierungsschritt verplant sind und mindestens einer der Aktivitäten $A_{MA}$ einer Mehrfachaktivität übernehmen könnten.

Summe der Bedarfe aller Aktivitäten einer Mehrfachaktivität:

$$\sum_{A_{MA}} R_{A_{MA}} \qquad\qquad (34)$$

Diese Variable beschreibt die Summe der Mitarbeiterbedarfe aller Aktivitäten einer Mehrfachaktivität $A_{MA}$.

Bedarf einer Mehrfachaktivität:

$$R_{MA} \qquad\qquad\qquad (35)$$

Diese Variable beschreibt den Mitarbeiterbedarf für eine Mehrfachaktivität $MA$ für den Fall, dass alle Mitarbeiter maximal qualifiziert sind.

Verhältnis von qualifizierten Mitarbeitern je Aktivität einer Mehrfachaktivität:

$$K_{A_{MA}} = \frac{E_{Q(A_{MA})}}{E_{Q(MA;A_{MA})}} \qquad\qquad (36)$$

Dieser Koeffizient beschreibt die Menge an Mitarbeitern, die für die Aktivität $A_{MA}$ qualifiziert sind, im Verhältnis zu diejenigen, die für die Mehrfachaktivität $MA$ qualifiziert sind. Da sich beide Werte des Quotienten während der Optimierung ändern können, variiert ebenfalls der Koeffizient. Der Wertebereich dieses Koeffizienten liegt zwischen 0 und 1.

Verhältnis von Mitarbeiterbedarf je Aktivität einer Mehrfachaktivität:

$$G_{A_{MA}} = \frac{R_{A_{MA}}}{\sum_{A_{MA}} R_{A_{MA}}} \qquad\qquad (37)$$

Dieser Faktor beschreibt das Verhältnis zwischen dem Mitarbeiterbedarf einer Aktivität einer Mehrfachaktivität $A_{MA}$ und der Summe der Bedarfe aller solcher Aktivitäten.

Verhältnis von Mitarbeiterbedarf je Aktivität einer Mehrfachaktivität (bezogen auf Mitarbeiterbedarf der Mehrfachaktivität):

$$F_{A_{MA}} = \left( \frac{R_{A_{MA}}}{\sum_{A_{MA}} R_{A_{MA}}} \right) \cdot R_{MA} = G_{A_{MA}} \cdot R_{MA} \qquad\qquad (38)$$

Dieser Faktor beschreibt das Verhältnis zwischen dem Mitarbeiterbedarf einer Aktivität einer Mehrfachaktivität $A_{MA}$ und der Summe der Bedarfe aller solcher Aktivitäten. Durch die anschließende Multiplikation wird das Verhältnis auf den Mitarbeiterbedarf der Mehrfachaktivität $R_{MA}$ umgerechnet. Da die Werte $R_{A_{MA}}$ und $R_{MA}$ mittels der Gleichungen 5—10 für jedes Zeitintervall nur einmal berechnet werden, bleiben die $F_{A_{MA}}$-Werte in jedem Optimierungsschritt konstant.

Approximation des Bedarfs je Aktivität einer Mehrfachaktivität:

$$N_{A_{MA}} = (1 - K_{A_{MA}}) \cdot R_{A_{MA}} + K_{A_{MA}} \cdot F_{A_{MA}} \qquad . \qquad (39)$$

Diese bei manchen Ausführungsformen verwendete Formel approximiert einen neuen Mitarbeiterbedarf für die Aktivität einer Mehrfachaktivität $A_{MA}$. Man beachte, dass die mit Gleichung 39 berechneten einzelnen $N_{A_{MA}}$-Werte der Mehrfachaktivität $MA$ als Hilfsgrößen zu verstehen sind, die nur in Summe (vgl. Gleichung 40) einen aussagekräftigen Wert darstellen, nämlich den Gesamtmitarbeiterbedarf der Mehrfachaktivität. Die Ergebnisse der Formel 39 sind also nur als Zwischenergebnisse zu verstehen. Der Term stellt eine Konvexkombination dar und liefert für jede Aktivität $A_{MA}$ einer Mehrfachaktivität $MA$ einen Wert zwischen den beiden Randwerten $R_{A_{MA}}$ und $F_{A_{MA}}$. Diese Neuberechnung berücksichtigt dabei die veränderten Verhältnisse der für die Aktivität $A_{MA}$ verfügbaren Mitarbeiter. Man beachte, dass diese Approximation für den Wert $K_{A_{MA}}=1$ (alle Mitarbeiter der Mehrfachaktivität $MA$ sind für Aktivität $A_{MA}$ qualifiziert) den Wert $F_{A_{MA}}$ liefert. Sind alle $K_{A_{MA}}$ Werte gleich eins (alle Mitarbeiter sind für alle Aktivitäten qualifiziert), so liefert die Summe aller $F_{A_{MA}}$ Werte den Wert $R_{MA}$. Gilt im anderen Extremfall $K_{A_{MA}}= 0$ (kein Mitarbeiter der Mehrfachaktivität $MA$ ist für Aktivität $A_{MA}$ qualifiziert), so ergibt sich der Wert $R_{A_{MA}}$. Sind alle $K_{A_{MA}}$ Werte gleich Null, so liefert die Summe aller $R_{A_{MA}}$ Werte den Wert $\sum_{A_{MA}} R_{A_{MA}}$. Da jeder Mitarbeiter der Mehrfachaktivität MA für mindestens eine Aktivität $A_{MA}$ qualifiziert ist, kommt der Fall $K_{A_{MA}}= 0$ nicht vor.

Ablauf

Um die erzielte Anpassung des Mitarbeiterbedarfs der Mehrfachaktivität $N_{MA}$ zu erreichen, wird also nach jedem Optimierungsschritt, der eine Veränderung des Verhältnisses der qualifizierten Mitarbeiter je Aktivität einer Mehrfachaktivität (vgl. Gleichung 36) zur Folge hat, die Approximation des Bedarfs je Aktivität einer Mehrfachaktivität $N_{A_{MA}}$ für jede Aktivität $A_{MA}$ errechnet und zu einem neuen Bedarf der Mehrfachaktivität aufsummiert. Für den neuen Mitarbeiterbedarf der Mehrfachaktivität gilt:

$$\sum_{A_{MA}} N_{A_{MA}} = N_{MA} \; .\qquad (40)$$

Durch diese Neuberechnung kann, wie bereits angesprochen, die Überprüfung über die Kapazitäten entfallen. Unter der Annahme, dass nach jedem bedeutsamen Optimierungsschritt der Bedarf der Mehrfachaktivität erneut berechnet wird, lautet die Gesamtzielfunktion bei manchen Ausführungsformen der 2. Variante:

$$\sum_{t} \left( \sum_{A_N} \left( \frac{R_{A_N}(t) - S_{A_N}(t)}{R_{A_N}(t)} \right)^2 + \left( \frac{N_{MA}(t) - BOC_{MA}(t)}{N_{MA}(t)} \right)^2 \right) \to 0 \qquad (41)$$

Das Entfernen der Überprüfung der Kapazitäten ist jedoch nicht zwingend notwendig, da die Anpassung des Bedarfs der Mehrfachaktivität nur über eine Näherung erfolgt. Um ein erhöhtes Maß an Sicherheit zur Vermeidung der Unterschreitung der Bedarfe der einzelnen Aktivitäten einer Mehrfachaktivität $A_{MA}$ zu gewährleisten, kann die Kapazitätsprüfung wie bei der 1. Variante verwendet werden. Es ergibt sich dann für manche Ausführungsformen der 2. Variante folgende Zielfunktion:

$$\sum_{t}\left(\sum_{A_N}\left(\frac{R_{A_N}(t)-S_{A_N}(t)}{R_{A_N}(t)}\right)^2+\left(\frac{N_{MA}(t)-BOC_{MA}(t)}{N_{MA}(t)}\right)^2+\sum_{A_{MA}}\left(\frac{R_{A_{MA}}(t)-C_{A_{MA}}(t)}{R_{A_{MA}}(t)}\right)^2\right)\rightarrow 0 \quad (42)$$

Wie bereits im Zusammenhang mit der 1. Variante erwähnt wurde, ist im dritten Term hinsichtlich der Unteraktivitäten $A_{MA}$ Folgendes zu beachten: der Bereich des Ausdrucks, der sich auf die Unteraktivitäten bezieht, wird nur dann für diejenigen Unteraktivitäten $A_{MA}$ in diese Berechnung einbezogen, für die die Bedingung $C_{A_{MA}}(t) \geq R_{A_{MA}}(t)$ nicht erfüllt ist, andernfalls wird die entsprechende Unteraktivität $A_{MA}$ nicht berücksichtigt und geht mit dem Wert "0" in den dritten Term ein.

Ausführungsformen beider Varianten des Optimierungsverfahrens werden nun anhand der Figuren beispielhaft veranschaulicht:

Fig.1 zeigt einen beispielhaften Mitarbeiterbedarfsplan über einen Zeitraum einer Stunde. Der Zeitraum ist in vier kürzere Zeitintervalle zu je 15 Minuten unterteilt. Bei den Aktivitäten handelt es sich hierbei, wie in einer Call-Center-Anwendung üblich, um verschiedene Typen von Telefonanrufen. In diesem Beispiel gibt es vier verschiedene Telefonanruftypen A, B, C und D, wobei die Bearbeitung der Telefonanruftypen A, B und C zu einer Mehrfachaktivität zusammengefaßt ist, und die Erledigung des Telefonanruftyps D als Normalaktivität angesehen wird. Die unmittelbar über den Balken angegebenen Mitarbeiterbedarfszahlen (Aktivitätsmitarbeiterbedarfe) beziehen sich auf den Fall, dass jeder Mitarbeiter nur über eine Einfachqualifikation verfügt, während sich die über den geschweiften Klammern angegebenen Bedarfszahlen auf den Gesamtmitarbeiterbedarf der Mehrfachaktivität unter der Annahme, dass alle Mitarbeiter für alle Aktivitäten der Mehrfachaktivitäten qualifiziert sind, beziehen. Die in Fig.1 angegebenen Aktivitätsmitarbeiterbedarfe werden mittels der Gleichungen (5)-(9) aus einem Arbeitsvolumen und einem gewünschten Servicelevel berechnet. Der Gesamtmitarbeiterbedarf der Mehrfachaktivität wird mit Gleichung (10) ermittelt. Bei dem Beispiel von Fig. 1 nimmt der Mitarbeiterbedarf innerhalb dieser Stunde (8:00 - 9:00 Uhr morgens) stetig zu, wie es in Call Centern häufig zu beobachten ist.

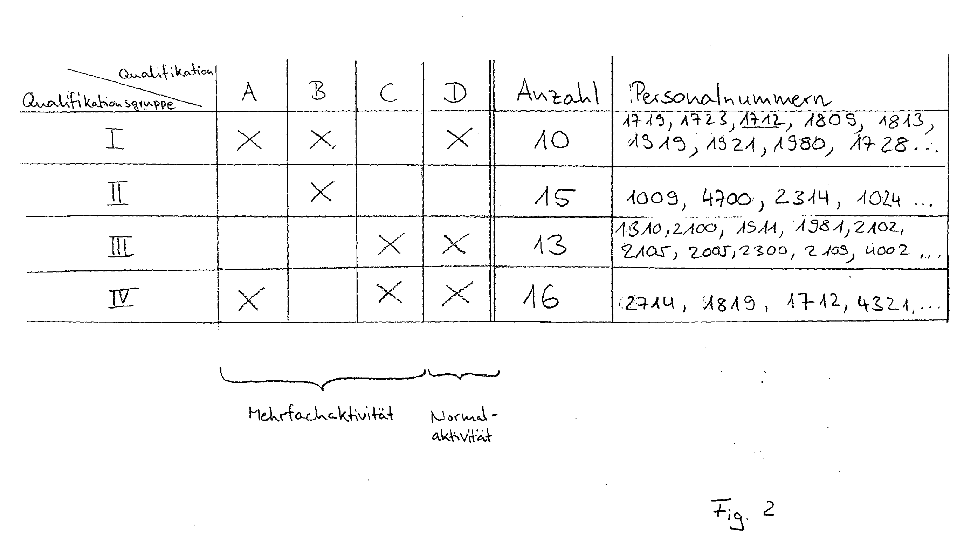

Fig. 2 stellt beispielhaft dar, über welche Mehrfachqualifikationen die Mitarbeiter verfügen. In der beschriebenen Ausführungsform lassen sich die Mitarbeiter in drei verschiedene Qualifikationsgruppen unterteilen. In Qualifikationsgruppe I befinden sich Mitarbeiter, welche die Anruftypen A, B und D bearbeiten können. Über diese Kombination von Qualifikationen verfügen in dem gegebenen Mitarbeiterbestand 10 Personen, von denen ein Teil exemplarisch in Form von Personalnummern in der ganz rechten Spalte repräsentiert ist. 15 Mitarbeiter gehören zur Qualifikationsgruppe II; sie verfügen alle nur über eine Einfachqualifikation und können nur Anrufe vom Typ B bearbeiten. Der Qualifikationsgruppe III sind 13 Mitarbeiter zugeordnet, welche für die Anruftypen C und D qualifiziert sind, und 16 Mitarbeiter aus Qualifikationsgruppe IV sind für die Bearbeitung der Anruftypen A, C und E einsatzfähig. Natürlich sind weitere Kombinationen von Qualifikationen möglich, die aber bei dem Beispiel von Fig. 2 nicht vorkommen. Ein Mitarbeiter, und zwar derjenige mit der Personalnummer 1712 aus der Qualifikationsgruppe, ist besonders markiert. Dies soll anzeigen, dass er als Schichtleiter nicht von dem Optimierungsverfahren auf die Normal- und Mehrfachaktivitäten verplant wird, sondern manuell auf die Aktivitäten verplant wird.

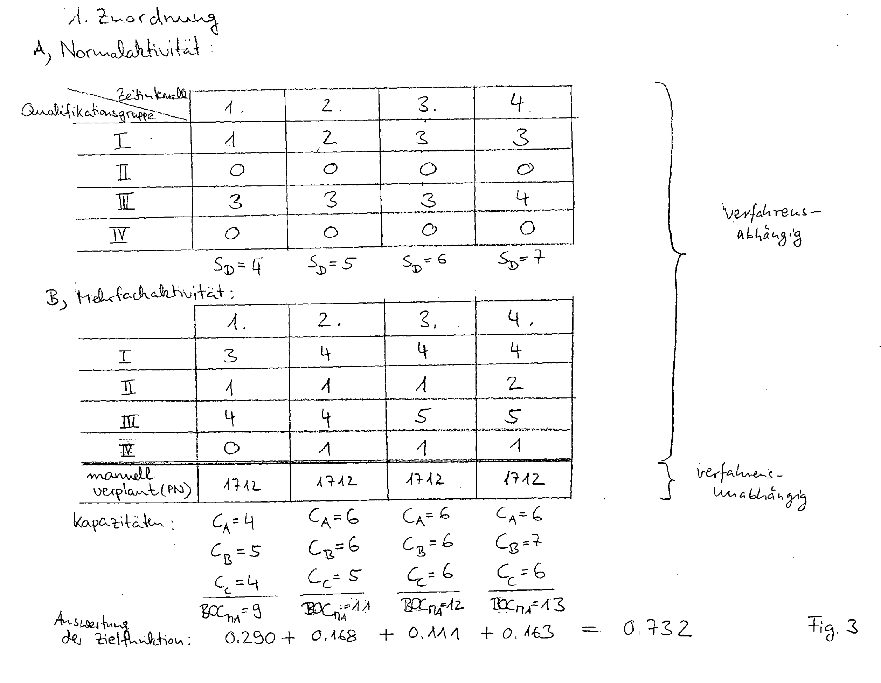

In Fig. 3 ist eine beispielhafte Mitarbeiter-Zuordnung und ihre Bewertung dargestellt. Man geht bei der Erstellung eines optimierten Mitarbeiterplanes von einem Ausgangsplan aus, der von dem Optimierungsverfahren schrittweise verändert wird. Es wird nun angenommen, dass die gezeigte Zuordnung während dieses Optimierungsverfahrens auftritt und einen aktuellen Plan darstellt. Auf diesem Plan wird nun ein Zug im Sinne eines Probeschrittes vorgenommen, und es wird anhand einer Bewertungsfunktion verglichen, ob der Zug eine verbesserte Zuordnung bringt oder nicht. Bringt der Zug eine Verbesserung, so wird der Plan entsprechend des Zuges verändert. Bringt der Zug eine Verschlechterung mit sich, so bleibt man in der Regel bei dem ursprünglichen Plan und probiert einen anderen Zug aus. Man beachte, dass es in einigen der oben beschriebenen Optimierungsverfahren wie z.B. Simulated Annealing und Tabusuche auch möglich ist, eine schlechtere Zuordnung anzunehmen, um einem lokalen Minimum zu entkommen.

Die obere Tabelle der Fig. 3 zeigt, wie viele Mitarbeiter bei der aktuellen Zuordnung aus den jeweiligen Qualifikationsgruppen auf die Normalaktivität D zugewiesen sind. Diese Mitarbeiter arbeiten dann nur auf der Normalaktivität D, auch wenn sie über weitere Qualifikationen verfügen. Im 1. Zeitintervall wird ein Mitarbeiter der Qualifikationsgruppe I und drei Mitarbeiter der Qualifikationsgruppe 3 auf die Normalaktivität verplant, so dass insgesamt vier Mitarbeiter zur Erledigung der Normalaktivität D zur Verfügung stehen. Man beachte, dass laut dem Mitarbeiterbedarf aus Fig. 1 jedoch fünf Personen notwendig sind, das Arbeitsvolumen zu bewältigen. Diese Diskrepanz geht in die Bewertungsfunktion in Form von Strafpunkten ein.

Die untere Tabelle zeigt die aktuelle Zuordnung im Bereich der Mehrfachaktivität. Im 1 Zeitintervall sind auf die Mehrfachaktivität drei Personen aus Qualifikationsgruppe I, eine Person aus Qualifikationsgruppe II und vier Personen aus Qualifikationsgruppe III zugeordnet. Man beachte, dass die Person mit der Personalnummer 1712 als Schichtleiter manuell auf alle vier Zeitintervalle verplant ist. Diese manuell vorgenommene Zuordnung wird von dem Optimierungsverfahren nicht verändert. Unterhalb der Tabelle der Mehrfachaktivität ist angegeben, wie viele Kapazitäten im Sinne der Gleichung 15 zur Erledigung der einzelnen Aktivitäten anhand der gegebenen Zuordnung vorhanden sind. Im ersten Zeitintervall sind vier Personen qualifiziert, um Anruftyp A entgegenzunehmen, fünf Personen können Anruftyp B beantworten und vier Personen sind für Anruftyp C vorhanden. Zwecks Vereinfachung wird bei der Angabe der Kapazitäten keinen Unterschied gemacht, ob eine Person eine Einfachqualifikation besitzt und daher vollständig für die Erledigung eines Anruftyps zur Verfügung steht, oder ob ein Mitarbeiter im Rahmen einer Mehrfachqualifikation für einen Anruftyp verfügbar ist und daher nur unter anderem zur Bearbeitung dieses Anruftyps zur Verfügung steht. Die Gesamtzahl der auf die Mehrfachaktivität zugeordneten Personen, mit $BOC_{MA}$ bezeichnet, ist kleiner als die Summe der Kapazitäten der Unteraktivitäten, da die Personen über Mehrfachqualifikationen verfügen.

Unterhalb der angegebenen Kapazitäten ist der für jedes Zeitintervall berechnete Wert der Zielfunktion (Gleichung 31), wie sie in der 1. Variante verwendet wird, angegeben. Man beachte, dass in den Zeitintervallen 1-3 der 3. Term der Zielfunktion (Gleichung 31) jeweils mit Null eingeht, da die Unteraktivitäten der Mehrfachaktivität durch die Kapazitäten abgedeckt sind. Im vierten Zeitintervall sind die Bedarfe keiner der Unteraktivitäten ausreichend abgedeckt, so dass der 3. Term der Zielfunktion diese Diskrepanzen mit Strafpunkten bewertet. Die Zuordnung als ganzes wird mit der Summe der Bewertungen der Zeitintervalle bewertet, wobei sich hier eine Bewertung von 0.732 ergibt.

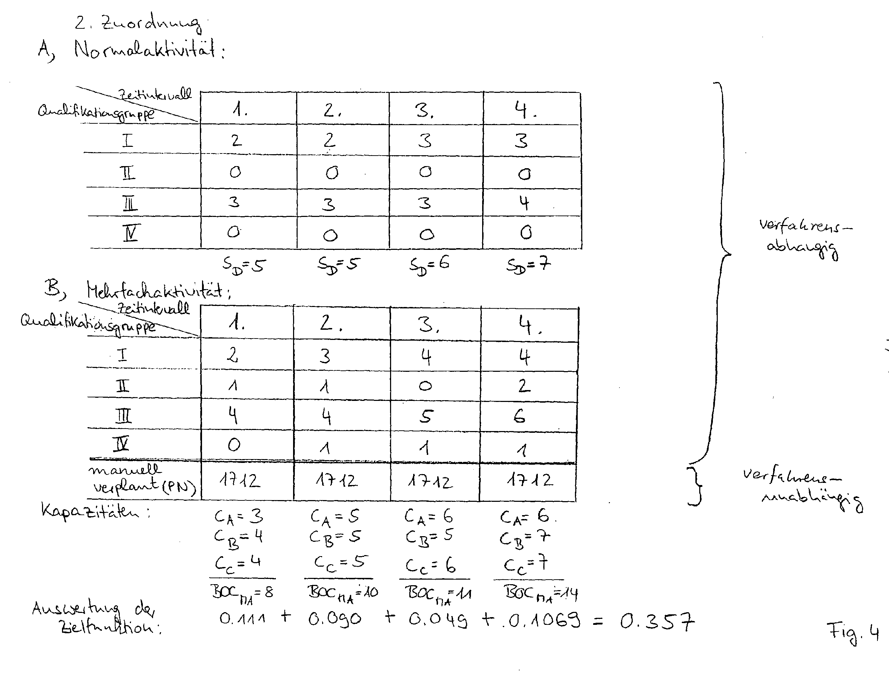

Ausgehend von der ersten Zuordnung in Fig. 3 zeigt Fig. 4 eine zweite Zuordnung, die aus der ersten Zuordnung entsteht, indem man im Bereich der Normalaktivität im ersten Zeitintervall einen Mitarbeiter der Qualifikationsgruppe I zusätzlich einteilt. Im Bereich der Mehrfachaktivität wird im ersten und zweiten Zeitintervall ein Mitarbeiter der Qualifikationsgruppe I entfernt, im dritten Zeitintervall wird ein Mitarbeiter der Qualifikationsgruppe II abgezogen und im vierten Zeitintervall wird ein Mitarbeiter der Qualifikationsgruppe III zusätzlich eingeplant. Dieser Zug führt zu neuen Kapazitäten, die unterhalb der Mehrfachaktivitätstabelle angegeben sind. Auf der Basis dieser neuen Kapazitäten findet nun eine Bewertung durch die Zielfunktion statt. Sollte die Zielfunktion (Gleichung 31) die neue Zuordnung mit einem niedrigeren Wert als die ursprüngliche Zuordnung bewerten, so wird der Zug tatsächlich durchgeführt. Sollte sich ein höherer Wert ergeben, so wird der Probeschritt verworfen und ausgehend von der 1. Zuordnung wird ein anderer Probeschritt gemacht und eine andere Zuordnung ausprobiert.

Man erkennt, dass in der zweiten Zuordnung im Bereich der Normalaktivität aufgrund der Zuordnung eines weiteren Mitarbeiters im ersten Zeitintervall die Diskrepanz zwischen dem Mitarbeiterbedarf und den zugeordneten Mitarbeitern verschwunden ist. Die Zielfunktion vergibt keine Strafpunkte, da der Bedarf und die zur Verfügung gestellten Mitarbeiter sich genau decken. Im Bereich der Mehrfachaktivität sieht man, dass, obwohl man in den Zeitintervallen 1-3 weniger Mitarbeiter eingeplant hat, die Mitarbeiterbedarfe der Unteraktivitäten immer noch ausreichend abgedeckt sind. Deshalb gibt es dafür auch weiterhin keine Strafpunkte. Allerdings hat sich in den Zeitintervallen 1- 3 jeweils die Anzahl der auf die Mehrfachaktivität eingesetzten Mitarbeiter um eins reduziert, so dass sich die $BOC_{MA}$-Werte nun näher an den $R_{MA}$-Werten befinden, was zu einer Reduktion von Strafpunkten im 2. Term der Zielfunktion führt. Im vierten Zeitintervall sind trotz der Zuteilung eines weiteren Mitarbeiters die Mitarbeiterbedarfe nicht abgedeckt. Jedoch ist zumindest der Anruftyp C nun besser abgedeckt, was zu einer Reduktion der Strafpunkte durch den 3. Term der Zielfunktion (Gleichung 31) führt. Allerdings hat sich dadurch auch der Wert der Variablen $BOC_{MA}$ um eins vom $R_{MA}$-Wert entfernt, so dass sich dadurch die Strafpunkte erhöht haben. Vergleicht man die beiden Bewertungen des 3. Zeitintervalls, so sieht man, dass die bessere Abdeckung des Anruftyps C zu einer stärkeren Reduktion von Strafpunkten führt, als durch die Entfernung vom $R_{MA}$-Werts Strafpunkte hinzukommen. Betrachtet man auch die anderen Zeitintervalle, so sieht man, dass sich auch dort Verbesserungen ergeben haben. Insgesamt betrachtet, wird also die zweite Zuordnung von der Zielfunktion als qualitativ hochwertiger bewertet als die erste Zuordnung, so dass der Zug nicht verworfen wird sondern tatsächlich im Plan durchgeführt wird.

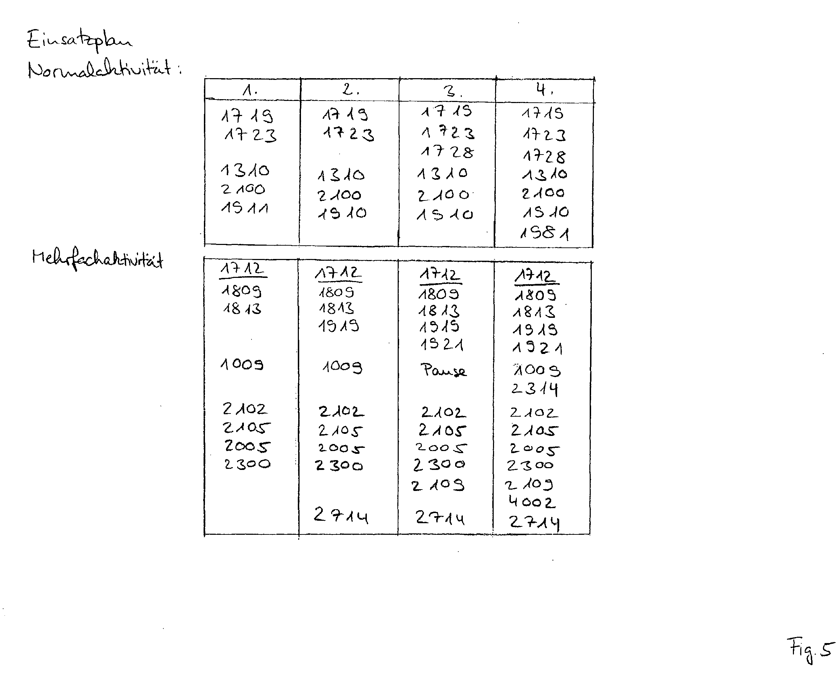

Fig. 5 zeigt einen Einsatzplan, der einzelne Mitarbeiter entsprechend der zweiten Zuordnung auf die einzelnen Zeitintervalle verteilt. Diese Zuordnung von Mitarbeitern kann von dem Optimierungsverfahren selbst vorgenommen werden, oder die einzelnen Mitarbeiter ordnen sich selbst entsprechend der Qualifikationsgruppe, der sie angehören, auf ein Zeitintervall zu.

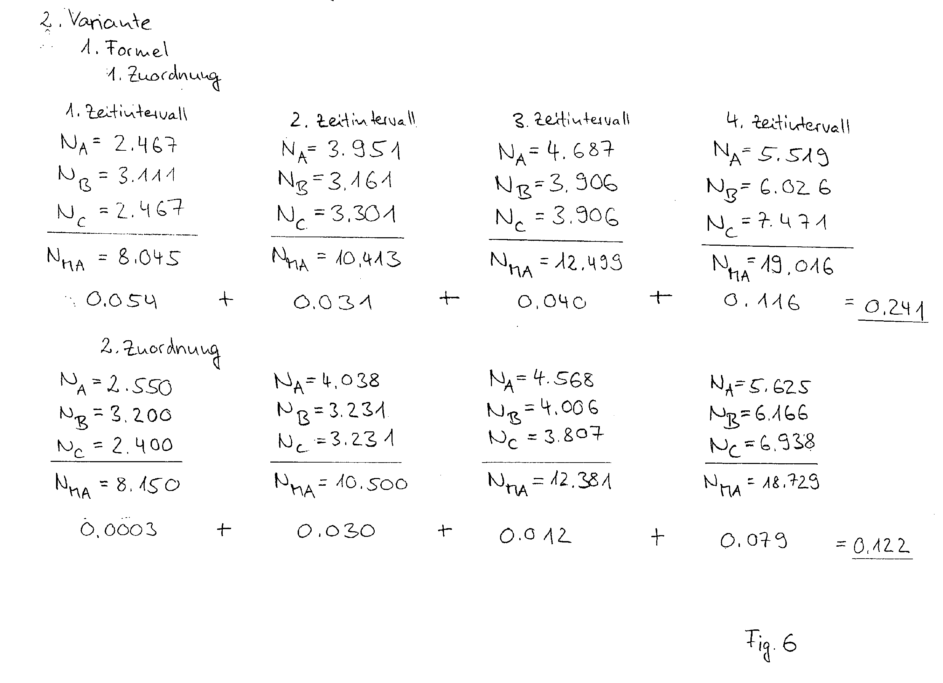

Fig. 6 zeigt Berechnungen der zweiten Verfahrensvariante (angewendet auf die erste und zweite Zuordnung) unter Verwendung von Gleichung 39. Für jedes Zeitintervall wird anhand der gegebenen Qualifikationen ein tatsächlicher Mitarbeiterbedarf $N_{MA}$ berechnet, der sich als Summe der Approximation der tatsächlichen Mitarbeiterbedarfe der Unteraktivitäten ergibt. Die Bewertung der Zuordnung erfolgt bei der zweiten Variante mittels Zielfunktion (Gleichung 41), deren erster Term die Überdeckung der Mitarbeiterbedarfe der Normalaktivitäten berücksichtigt, und der zweite Term die approximierten Mitarbeiterbedarfe mit den insgesamt auf die Mehrfachaktivität zugewiesenen Mitarbeitern vergleicht. Eine Überprüfung der Abdeckung der Mitarbeiterbedarfe der Unteraktivitäten findet nicht statt, kann aber zusätzlich entsprechend Gleichung 42 durchgeführt werden. Wie auch die erste Variante bewertet die zweite Variante die zweite Zuordnung mit einem niedrigeren Wert als die erste Zuordnung, so dass man auch bei Anwendung der zweiten Variante diesen Zug tatsächlich im Plan durchführt.

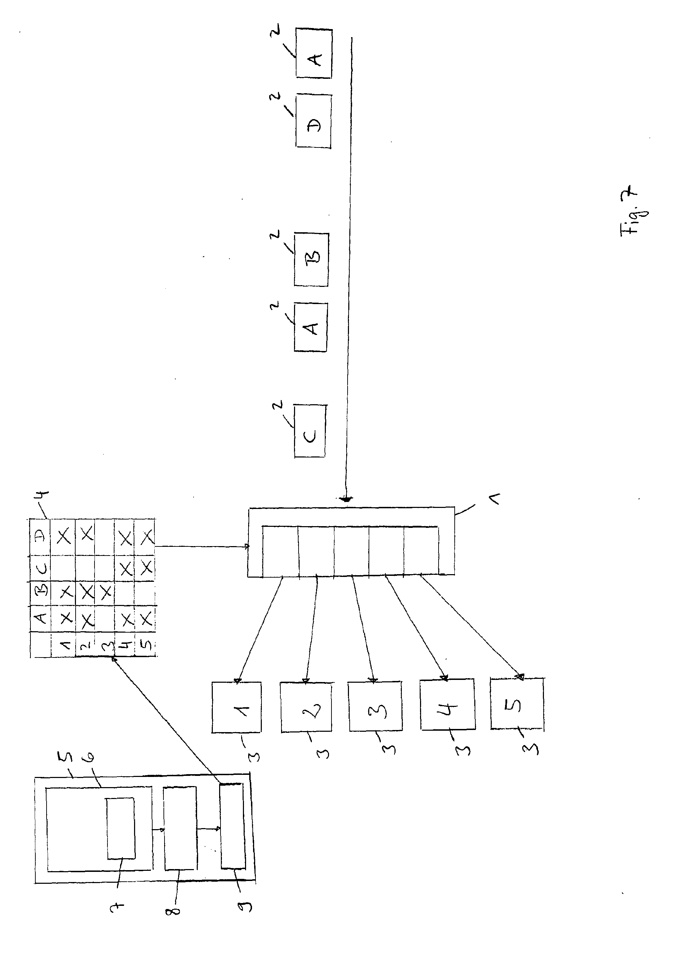

Fig. 7 zeigt schematisch einen Telefonanrufrouter 1, der eingehende Anrufe 2 entsprechend ihres Anruftyps an Mitarbeiterarbeitsplätze 3 weiterleitet. Um diese Aufgabe erledigen zu können, hat der Telefonanrufrouter 1 Zugriff auf einen Qualifikationsplan 4, der für jeden Zeitpunkt angibt, an welchem Arbeitsplatz welche Qualifikation zur Erledigung eines Anruftyps zur Verfügung steht. Der Qualifikationsplan 4 setzt auf einem erstellten Einsatzplan 8 (vgl. Fig. 5) auf, der unter Verwendung des beschriebenen Optimierungsverfahrens von einem Optimierungsmodul 6, das auf einem Rechner 5 abläuft, erstellt wird. Das Optimierungsmodul verfügt ferner über eine Zielfunktion (Gleichungen 31, 41, 42) wie sie weiter oben beschrieben werden. Zur Erstellung des Qualifikationsplanes 4 aus dem Einsatzplan 8 ist ferner eine Tabelle 9 vorgesehen, die angibt, welcher Mitarbeiter sich auf welchem Arbeitsplatz befindet.

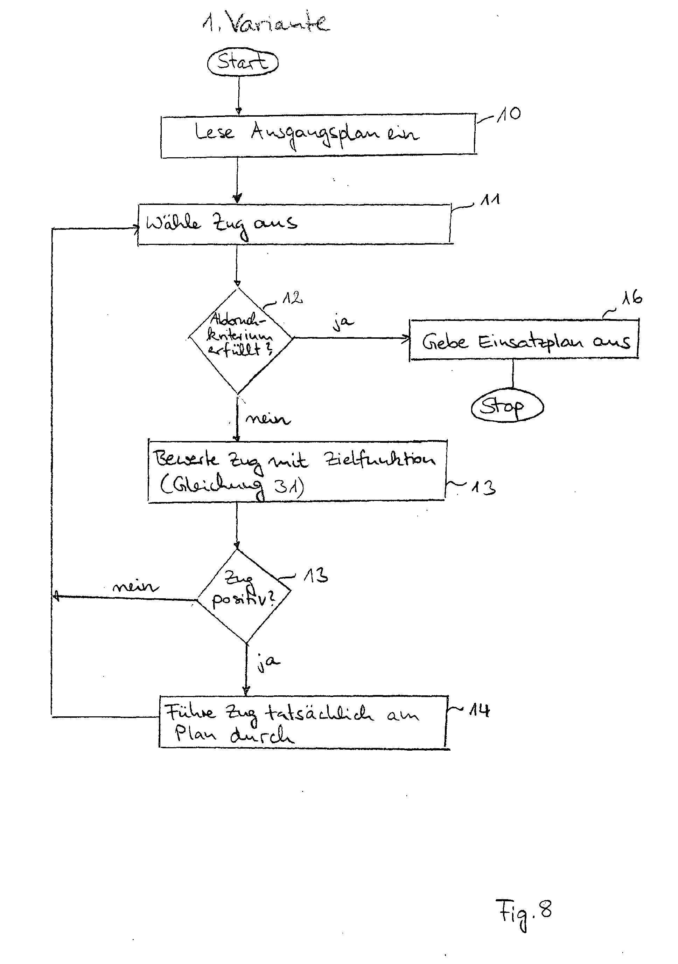

Fig. 8 zeigt ein Ablaufdiagramm des Optimierungsverfahrens entsprechend der ersten Variante. Zu Beginn wird in 10 ein Ausgangsplan eingelesen. Dieser Plan stellt eine Mitarbeiterzuordnung dar, die man optimieren möchte. In 11 verändert man nun diesen Plan, indem man einen Zug durchführt, d.h. auf einzelne Zeitintervalle weitere Mitarbeiter einplant, oder Mitarbeiter aus einzelnen Zeitintervallen abzieht und auf neue Zeitintervalle und/oder Aktivitäten verplant. In 12 wird geprüft, ob ein Abbruchkriterium erfüllt ist. Ein Abbruchkriterium ist eine Bedingung, die erfüllt ist, wenn man eine gewisse Anzahl Optimierungsschritte durchlaufen hat, oder wenn kein Zug mehr eine Verbesserung mit sich bringt. Ist das Abbruchkriterium erfüllt, so gibt man in 16 die aktuelle Zuordnung als Einsatzplan aus. Ist das Abbruchkriterium nicht erfüllt, so wird in 13 die durch den letzten Zug entstandene Zuordnung zum Beispiel mit Gleichung 31 bewertet, und es wird in 14 überprüft, ob die Zielfunktion diese neu entstandene Zuordnung als qualitativ hochwertiger bewertet als die ursprüngliche Zuordnung. Sollte die neue Zuordnung schlechter bewertet werden als die ursprüngliche Zuordnung, so wird der Zug im Plan in der Regel nicht durchgeführt (evtl. anders z.B. bei Tabusuche oder Simulated Annealing), sondern man wählt in 11 einen anderen Zug aus. Sollte die neue entstandene Zuordnung in 13 von der Zielfunktion jedoch als qualitativ hochwertiger bewertet werden als die ursprüngliche Zuordnung, so führt man in 14 den Zug tatsächlich im Plan aus und wählt in 11 einen neuen Zug aus. Diese Iteration wird solange durchlaufen, bis in 12 das Abbruchkriterium erfüllt ist.

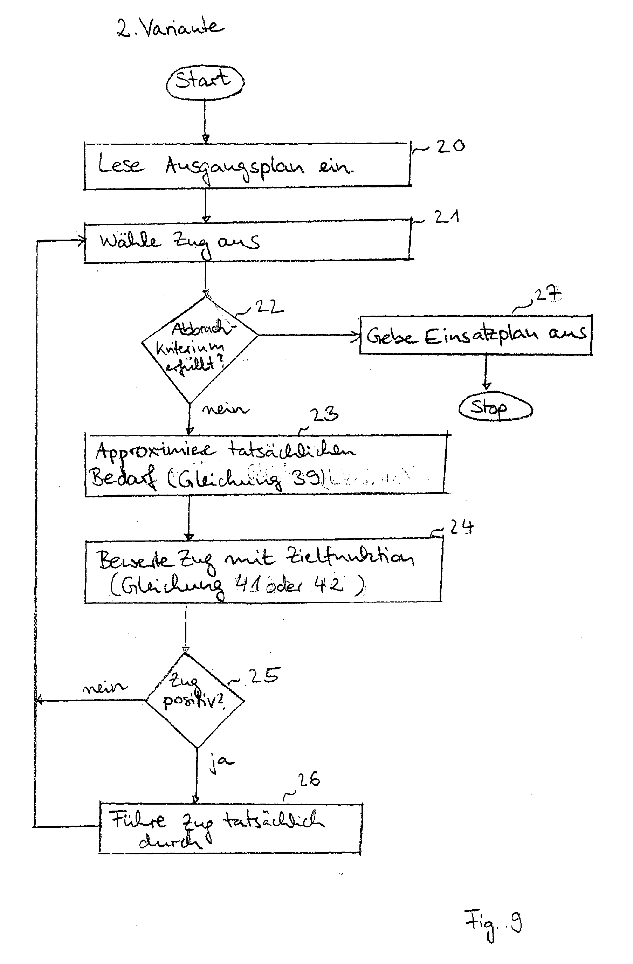

Fig. 9 zeigt ein Ablaufdiagramm des Optimierungsverfahrens entsprechend der zweiten Variante. In 20 wird ein Ausgangsplan eingelesen, der optimiert werden soll. In 21 wird ein Zug ausgewählt, und in 22 wird überprüft, ob ein Abbruchkriterium erfüllt ist. Sollte das Abbruchkriterium erfüllt sein, so wird in 27 die aktuelle Zuordnung als Einsatzplan ausgegeben. Ist das Abbruchkriterium nicht erfüllt, so wird in 23 anhand der durch den Zug getroffenen Zuordnung mittels einer Approximationsformel (Gleichungen 39 und 40) ein tatsächlicher Bedarf einer Mehrfachaktivität berechnet. In 24 wird dieser tatsächliche Bedarf in einer Zielfunktion (Gleichung 41 bzw. 42) mit der Anzahl der auf die Mehrfachaktivität insgesamt zugewiesenen Mitarbeitern verglichen. In die Zielfunktion geht daneben noch ein Term ein, der die Abdeckung der Normalaktivitäten berücksichtigt. Wird in 25 die durch den durchgeführten Zug entstandene Zuordnung von der Zielfunktion als qualitativ hochwertiger bewertet als die ursprüngliche Zuordnung, so wird in 26 der Zug im Plan tatsächlich durchgeführt. Stellt die neue entstandene Zuordnung eine Verschlechterung dar, so wird der Zug nicht ausgeführt, sondern in 21 ein neuer Zug ausgewählt. Diese Iteration wird solange durchlaufen, bis in 22 das Abbruchkriterium erfüllt ist.

Mit den beschriebenen Ausführungsformen kann der einzelne Zug in der Optimierung mit relativ wenigen Rechenoperationen durchgeführt werden, so dass in der für eine Optimierung üblicherweise nur begrenzt zur Verfügung stehenden Zeit relativ viele Züge probiert werden können. Man erhält somit schnell ein gutes Optimierungsergebnis, und somit beispielsweise bei gegebenem Mitarbeiterstamm eines Call Centers einen verbesserten Service Level (z.B. geringere Wartezeit) beim Betrieb des Call Centers.

**Patentansprüche**

1. Verfahren zur Erstellung eines Einsatzplanes für Mitarbeiter mit Ein- oder Mehrfachqualifikation zum Ausführen von Aktivitäten, die jeweils eine Einfachqualifikation erfordern, welches umfasst:

   Wiederholtes Generieren (11, 21) einer Einsatzplan-Zuordnung der Mitarbeiter,
   Bewerten (13, 24) der Qualität der jeweils generierten Zuordnung anhand einer Zielfunktion (Gleichung 31, 41 oder 42),
   und schließlich Verwenden (16, 27) einer der Zuordnungen auf der Grundlage der Qualitätsbewertung als die den Einsatzplan darstellende Zuordnung,
   wobei die Zielfunktion einen Term (2. Term von Gleichung 31, 41 oder 42) umfasst, der Zuordnungen umso qualitativ hochwertiger bewertet, je kleiner der Unterschied zwischen der Anzahl der auf die Aktivitäten eingesetzten Mitarbeiter und dem berechneten Gesamtmitarbeiterbedarf der Aktivitäten ist.

**2.** Verfahren zum Einrichten eines Telefonanrufrouters (1) auf der Grundlage eines zu erstellenden Einsatzplanes für Mitarbeiter mit Ein- oder Mehrfachqualifikation zum Ausführen von Aktivitäten, die jeweils eine Einfachqualifikation erfordern, welches umfasst:

Wiederholtes Generieren (11,21) einer Einsatzplan-Zuordnung der Mitarbeiter,
Bewerten (13, 24) der Qualität der jeweils generierten Zuordnung anhand einer Zielfunktion (Gleichung 31, 41 oder 42),
und schließlich Verwenden (16, 27) einer der Zuordnungen auf der Grundlage der Qualitätsbewertung als die den Einsatzplan darstellende Zuordnung,
wobei die Zielfunktion einen Term (2. Term von Gleichung 31, 41 oder 42) umfasst, der Zuordnungen umso qualitativ hochwertiger bewertet, je kleiner der Unterschied zwischen der Anzahl der auf die Aktivitäten eingesetzten Mitarbeiter und dem berechneten Gesamtmitarbeiterbedarf der Aktivitäten ist,
Einrichten des Telefonanrufrouters (1) derart, dass er Telefonanrufe, zu deren Beantwortung jeweils eine Einfachqualifikation erforderlich ist, an einen Mitarbeiter weiterleitet, der laut dem erstellten Einsatzplan (8) zum Zeitpunkt des Telefonanrufs im Einsatz ist und qualifiziert ist, diesen zu beantworten.

**3.** Verfahren nach Anspruch 1 oder 2, wobei die genannten Aktivitäten zusammen eine Mehrfachaktivität definieren und wobei der Gesamtmitarbeiterbedarf ein mehrfachaktivitätsbezogener Bedarfswert ist, der bei dem wiederholten Generieren (11, 21) einer Einsatzplan-Zuordnung nicht verändert wird,
außerdem für jede Aktivität ein Aktivitätsmitarbeiterbedarf berechnet wird, der angibt, wie viele Mitarbeiter man benötigt, wenn jeder der eingesetzten Mitarbeiter aufgrund seiner Einfachqualifikation nur für eine Aktivität qualifiziert ist,
und die Zielfunktion einen weiteren Term (3. Term von Gleichung 31) umfasst, der Zuordnungen umso qualitativ hochwertiger bewertet, je kleiner der Unterschied zwischen dem für jede Aktivität berechneten Aktivitätsmitarbeiterbedarf und der Anzahl der auf die Mehrfachaktivität zugeordneten Mitarbeiter ist, die für die Aktivität qualifiziert sind.

**4.** Verfahren nach Anspruch 3, wobei der mehrfachaktivitätsbezogene Bedarfswert ein Bedarfswert ist unter der Annahme, dass jeder auf die Mehrfachaktivität eingesetzte Mitarbeiter aufgrund seiner Mehrfachqualifikation für alle Aktivitäten der Mehrfachaktivität qualifiziert ist.

**5.** Verfahren nach Anspruch 3, wobei der mehrfachaktivitätsbezogene Bedarfswert ein Bedarfswert ist, der tatsächlich vorhandene Qualifikationen der Mitarbeiter berücksichtigt.

**6.** Verfahren nach Anspruch 1 oder 2, wobei die genannten Aktivitäten zusammen eine Mehrfachaktivität definieren und wobei der Gesamtmitarbeiterbedarf ein approximierter, tatsächlicher Bedarfswert (Gleichungen 39 und 40) ist, der nach jedem Generieren einer Einsatzplan-Zuordnung der Mitarbeiter berechnet wird und angibt, wie viele Mitarbeiter man bei den durch die aktuell generierte Einsatzplan-Zuordnung gegebenen Qualifikationen benötigt.

**7.** Verfahren nach Anspruch 6, wobei die Berechnung des approximierten, tatsächlichen Bedarfs anhand einer Approximationsformel (Gleichungen 39 und 40) durchgeführt wird.

**8.** Verfahren nach Anspruch 6 oder 7, wobei die Zielfunktion einen weiteren Term (3. Term von Gleichung 42) umfasst, der Zuordnungen umso qualitativ hochwertiger bewertet, je kleiner der Unterschied zwischen einem für jede Aktivität berechneten Aktivitätsmitarbeiterbedarf, unter der Annahme, dass jeder Mitarbeiter nur für eine Aktivität qualifiziert ist, und einer jeweiligen Anzahl Mitarbeiter ist, die für die Aktivität qualifiziert sind.

**9.** Verfahren nach einem der vorhergehenden Ansprüche, wobei die Zielfunktion einen weiteren Term (1. Term von Gleichung 31, 41 oder 42) umfasst, der Normalaktivitäten, die aus jeweils einer Aktivität bestehen, in die Bewertung einbezieht und Zuordnungen umso qualitativ hochwertiger bewertet, je kleiner der Unterschied zwischen den für jede Normalaktivität berechneten Aktivitätsmitarbeiterbedarf und der Anzahl der auf die Normalaktivität zugeordneten Mitarbeiter ist.

**10.** Verfahren nach einem der vorhergehenden Ansprüche, wobei die Einsatzplan-Zuordnung, die sich über ein längeres Zeitintervall erstreckt, in kürzere Zeitintervalle eingeteilt wird, die Einsatzplan-Zuordnung der Mitarbeiter für jedes kürzere Zeitintervall durchgeführt wird und die Zielfunktion zur Bewertung einer Einsatzplan-Zuordnung die Bewertungen der kürzeren Zeitintervalle aufsummiert.

**11.** Verfahren nach einem der Ansprüche 3 bis 10, wobei zu Beginn des Verfahrens Mitarbeiter manuell auf Aktivitäten innerhalb einer Mehrfachaktivität zugeordnet werden.

**12.** Verfahren nach einem der vorhergehenden Ansprüche, wobei ein Scheduler die Einsatzplan-Zuordnungen unter Berücksichtigung von Randbedingungen im Rahmen eines Optimierungsverfahrens generiert.

**13.** Verfahren nach einem der vorhergehenden Ansprüche, wobei als Optimierungsverfahren eines der folgenden Optimierungsverfahren verwendet wird: TabuSuche, Simulated Annealing, Hill-Climbing, ein genetischer Algorithmus und Branch-and-Bound-Verfahren.

**14.** Telefonanrufrouter (1), der so eingerichtet ist, dass er Telefonanrufe (2), zur deren Beantwortung jeweils eine Qualifikation erforderlich ist, an einen Mitarbeiter weiterleitet, der laut eines nach einem der Ansprüche 1 bis 11 erstellten Einsatzplanes zum Zeitpunkt des Telefonanrufs im Einsatz ist und qualifiziert ist, den Telefonanruf zu beantworten.

**15.** Computerprogramm, das bei Ausführung auf einem Computer ein Verfahren nach einem der Ansprüche 1 bis 13 durchführt.

Fig. 1

| Qualifikationsgruppe \ Qualifikation | A | B | C | D | Anzahl | Personalnummern |
|---|---|---|---|---|---|---|
| I | X | X | | X | 10 | 1719, 1723, 1712, 1809, 1813, 1819, 1921, 1980, 1728... |
| II | | X | | | 15 | 1009, 4700, 2314, 1024 ... |
| III | | | X | X | 13 | 1310, 2100, 1511, 1981, 2102, 2105, 2005, 2300, 2109, 4002 ... |
| IV | X | | X | X | 16 | 2714, 1819, 1712, 4321, ... |

Mehrfachaktivität    Normal-aktivität

Fig. 2

EP 1 729 247 A1

1. Zuordnung

A) Normalaktivität:

| Zeitintervall / Qualifikationsgruppe | 1. | 2. | 3. | 4. |
|---|---|---|---|---|
| I | 1 | 2 | 3 | 3 |
| II | O | O | O | O |
| III | 3 | 3 | 3 | 4 |
| IV | O | O | O | O |
|  | $S_D=4$ | $S_D=5$ | $S_D=6$ | $S_D=7$ |

verfahrens-abhängig

B) Mehrfachaktivität:

| | 1. | 2. | 3. | 4. |
|---|---|---|---|---|
| I | 3 | 4 | 4 | 4 |
| II | 1 | 1 | 1 | 2 |
| III | 4 | 4 | 5 | 5 |
| IV | O | 1 | 1 | 1 |
| manuell verplant (PN) | 1712 | 1712 | 1712 | 1712 |

verfahrens-unabhängig

Kapazitäten:

| $C_A=4$ | $C_A=6$ | $C_A=6$ | $C_A=6$ |
|---|---|---|---|
| $C_B=5$ | $C_B=6$ | $C_B=6$ | $C_B=7$ |
| $C_C=4$ | $C_C=5$ | $C_C=6$ | $C_C=6$ |
| $BOC_{nA}=9$ | $BOC_{nA}=11$ | $BOC_{nA}=12$ | $BOC_{nA}=13$ |

Auswertung der Zielfunktion: $0.290 + 0.168 + 0.111 + 0.163 = 0.732$

Fig. 3

2. Zuordnung

A, Normalaktivität:

| Zeitinkervall / Qualifikationsgruppe | 1. | 2. | 3. | 4. |
|---|---|---|---|---|
| I | 2 | 2 | 3 | 3 |
| II | 0 | 0 | 0 | 0 |
| III | 3 | 3 | 3 | 4 |
| IV | 0 | 0 | 0 | 0 |
| | $S_D=5$ | $S_D=5$ | $S_D=6$ | $S_D=7$ |

B, Mehrfachaktivität:

| Zeitinkervall / Qualifikationsgruppe | 1. | 2. | 3. | 4. |
|---|---|---|---|---|
| I | 2 | 3 | 4 | 4 |
| II | 1 | 1 | 0 | 2 |
| III | 4 | 4 | 5 | 6 |
| IV | 0 | 1 | 1 | 1 |
| manuell verplant (PN) | 17 12 | 17 12 | 17 12 | 17 12 |

verfahrens-abhängig

verfahrens-unabhängig

Kapazitäten:

| | | | |
|---|---|---|---|
| $C_A=3$ | $C_A=5$ | $C_A=6$ | $C_A=6$ |
| $C_B=4$ | $C_B=5$ | $C_B=5$ | $C_B=7$ |
| $C_C=4$ | $C_C=5$ | $C_C=6$ | $C_C=7$ |
| $BOC_{nA}=8$ | $BOC_{nA}=10$ | $BOC_{nA}=11$ | $BOC_{nA}=14$ |

Auswertung der Zielfunktion:

$$0.111 + 0.090 + 0.049 + 0.1069 = 0.357$$

Fig. 4

EP 1 729 247 A1

Einsatzplan
Normalaktivität:

| 1. | 2. | 3. | 4. |
|---|---|---|---|
| 1719 | 1719 | 1719 | 1719 |
| 1723 | 1723 | 1723 | 1723 |
|  |  | 1728 | 1728 |
| 1310 | 1310 | 1310 | 1310 |
| 2100 | 2100 | 2100 | 2100 |
| 1911 | 1910 | 1910 | 1910 |
|  |  |  | 1981 |

Mehrfachaktivität

| 1. | 2. | 3. | 4. |
|---|---|---|---|
| 1712 | 1712 | 1712 | 1712 |
| 1809 | 1809 | 1809 | 1809 |
| 1813 | 1813 | 1813 | 1813 |
|  | 1919 | 1919 | 1919 |
|  |  | 1921 | 1921 |
| 1009 | 1009 | Pause | 1009 |
|  |  |  | 2314 |
| 2102 | 2102 | 2102 | 2102 |
| 2105 | 2105 | 2105 | 2105 |
| 2005 | 2005 | 2005 | 2005 |
| 2300 | 2300 | 2300 | 2300 |
|  |  | 2109 | 2109 |
|  |  |  | 4002 |
|  | 2714 | 2714 | 2714 |

Fig. 5

2. Variante

   1. Formel

      1. Zuordnung

| 1. Zeitintervall | 2. Zeitintervall | 3. Zeitintervall | 4. Zeitintervall |
|---|---|---|---|
| $N_A = 2.467$ | $N_A = 3.951$ | $N_A = 4.687$ | $N_A = 5.519$ |
| $N_B = 3.111$ | $N_B = 3.161$ | $N_B = 3.906$ | $N_B = 6.026$ |
| $N_C = 2.467$ | $N_C = 3.301$ | $N_C = 3.906$ | $N_C = 7.471$ |
| $N_{MA} = 8.045$ | $N_{MA} = 10.413$ | $N_{MA} = 12.499$ | $N_{MA} = 19.016$ |
| 0.054 $+$ | 0.031 $+$ | 0.040 $+$ | 0.116 $= 0.241$ |

      2. Zuordnung

| $N_A = 2.550$ | $N_A = 4.038$ | $N_A = 4.568$ | $N_A = 5.625$ |
|---|---|---|---|
| $N_B = 3.200$ | $N_B = 3.231$ | $N_B = 4.006$ | $N_B = 6.166$ |
| $N_C = 2.400$ | $N_C = 3.231$ | $N_C = 3.807$ | $N_C = 6.938$ |
| $N_{MA} = 8.150$ | $N_{MA} = 10.500$ | $N_{MA} = 12.381$ | $N_{MA} = 18.729$ |
| 0.0003 $+$ | 0.030 $+$ | 0.012 $+$ | 0.079 $= 0.122$ |

Fig. 6

EP 1 729 247 A1

Fig. 7

1. Variante

Fig. 8

2. Variante

Start

Lese Ausgangsplan ein ~20

Wähle Zug aus ~21

Abbruch-Kriterium erfüllt? ~22

Gebe Einsatzplan aus ~27

Stop

nein 23

Approximiere tatsächlichen Bedarf (Gleichung 39)(...40)

Bewerte Zug mit Zielfunktion (Gleichung 41 oder 42) ~24

Zug positiv? ~25

nein

ja

Führe Zug tatsächlich durch ~26

Fig. 9

**Europäisches Patentamt**

**EUROPÄISCHER RECHERCHENBERICHT**

Nummer der Anmeldung

EP 05 01 1856

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2005/043986 A1 (MCCONNELL MATTHEW G.A ET AL) 24. Februar 2005 (2005-02-24) * Zusammenfassung * * Absatz [0006] * * Absatz [0039] * * Absatz [0047] * ----- | 1-15 | G06F17/60 |
| X,D | US 6 044 355 A (CROCKETT ET AL) 28. März 2000 (2000-03-28) * Spalte 1, Zeilen 12-41 * * Spalte 5, Zeilen 5-29 * * Spalte 7, Zeilen 3-59 * ----- | 1-15 | |
| A | EP 1 248 449 A (BLUE PUMPKIN SOFTWARE, INC) 9. Oktober 2002 (2002-10-09) * Absätze [0014] - [0018] * ----- | 1-15 | |
| A | US 6 628 777 B1 (MCILLWAINE JOHN C. C ET AL) 30. September 2003 (2003-09-30) * Spalte 3, Zeile 43 - Spalte 4, Zeile 35 * ----- | 1-15 | RECHERCHIERTE SACHGEBIETE (Int.Cl.7) |
| A | US 2003/081757 A1 (MENGSHOEL OLE J ET AL) 1. Mai 2003 (2003-05-01) * Absätze [0018], [0019] * ----- | 1-15 | G06F |

Der vorliegende Recherchenbericht wurde für alle Patentansprüche erstellt

| Recherchenort | Abschlußdatum der Recherche | Prüfer |
|---|---|---|
| München | 2. August 2005 | Breidenich, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 01 1856

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 2005043986 | A1 | 24-02-2005 | WO | 2005020546 A2 | 03-03-2005 |
| US 6044355 | A | 28-03-2000 | EP | 0995300 A2 | 26-04-2000 |
| | | | WO | 9903248 A2 | 21-01-1999 |
| EP 1248449 | A | 09-10-2002 | US | 2002143597 A1 | 03-10-2002 |
| | | | EP | 1248448 A2 | 09-10-2002 |
| | | | EP | 1248449 A2 | 09-10-2002 |
| US 6628777 | B1 | 30-09-2003 | US | 2004202308 A1 | 14-10-2004 |
| | | | US | 2004202309 A1 | 14-10-2004 |
| US 2003081757 | A1 | 01-05-2003 | US | 2003095652 A1 | 22-05-2003 |
| | | | CN | 1409538 A | 09-04-2003 |
| | | | EP | 1296502 A2 | 26-03-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6044355 A

- US 5289368 A

**In der Beschreibung aufgeführte Nicht-Patentliteratur**

- Robust Algorithms for Sharing Agents with Multiple Skills. **BORST, S. ; SERI, P.** Bell Labs, Lucent Technologies. Murray Hill, 2000, 5
- **H. HENN et al.** Handbuch Call Center Management. telepublic Verlag, 204-205
- **RUSSELL, S. ; NORVIG, P.** Artificial Intelligence-A Modern Approach. Prentice Hall, 1995, 111-112

- **RUSSELL, S. ; NORVIG, P.** Artificial Intelligence-A Modern Approach. Prentice Hall, 1995, 113-114
- **RUSSELL, S. ; NORVIG, P.** Artificial Intelligence-A Modern Approach. Prentice Hall, 1995, 619-621